# EUROPEAN PATENT SPECIFICATION

(11) **EP 3 524 511 B1**
(45) Date of publication and mention of the grant of the patent: **23.12.2020**
(21) Application number: 19152817.3
(22) Date of filing: 21.01.2019
(51) Int. Cl.: B64C 1/14

(54) **AIRCRAFT PRIVACY DOOR AND DOOR FRAME ASSEMBLY**
FLUGZEUGTÜR FÜR PRIVATSPHÄRE UND TÜRRAHMENANORDNUNG
PORTE DE CONFIDENTIALITÉ D'AÉRONEF ET ENSEMBLE CADRE DE PORTE

(30) Priority: 08.02.2018 US 201862628254 P; 26.03.2018 US 201815935318; 13.04.2018 NL 2020765
(43) Date of publication of application: 14.08.2019
(73) Proprietor: The Boeing Company, Chicago, IL 60606-1596 (US)
(72) Inventor: Movsesian, Sami, Chicago, IL 60606-1596 (US); Sauer, Steven H., Chicago, IL 60606-1596 (US)
(74) Representative: Duxbury, Stephen

(56) References cited:
- WO-A2-03/029585
- WO-A2-03/029591
- WO-A2-03/106796
- GB-A- 2 419 158
- JP-B1- 2 909 463
- US-A1- 2002 092 951
- US-A1- 2018 346 091
- US-B1- 6 484 449

## Description

The present disclosure generally relates to an aircraft privacy door and related door frame assembly.

During both ground operations and flight operations of an aircraft, it may be necessary to open the flight deck door that separates the flight deck, or cockpit, from the cabin of the aircraft. For instance, when a flight crew is replaced during ground operations, one flight crew will leave the flight deck and another flight crew will enter the flight deck. In the case of a passenger aircraft, this often occurs while passengers are deplaning and boarding, which frequently takes place near the front of the aircraft, adjacent to the flight deck. In such situations, it would be desirable to provide separation between the flight deck and the cabin of the aircraft. In some cases, a simple curtain is drawn to separate the flight deck from the cabin area, while the flight crew moves in and out of the aircraft.

Similarly, during flight operations, a member of the flight crew may need to leave the flight deck temporarily, requiring the flight deck door to be opened. Again, in these situations, it would be desirable to separate the cabin area from the flight deck when the flight deck door must be opened during flight operations to provide the privacy, security, or both, that may be needed.

What is needed is an improved way to provide separation between different areas of an aircraft during both flight and ground operations.

The abstract of US 2002/092951 refers to 'a lock system particularly suited to the requirements of restricting access to an aircraft cockpit, although the invention may equally be applied to a range of other applications. Disclosed is a lock system including a door mounted locking bolt that may be actuated by a handle on the cockpit side of the door and by a key on the cabin side of the door. The key actuator may be disabled from the cockpit side of the door. The bolt is configured to engage a doorframe mounted bolt-receiver the bolt and the bolt-receiver thereby interlocking in a way that holds the bolt in the bolt-receiver in the advent of attempted forced entry to the cockpit, such as by a terrorist. The doorframe elements are further configured so as to automatically release the bolt and allow the door to open freely in the case of a sudden differential is cockpit and cabin air pressure. The automatic release may also be activated a manual switch or by a system override.'

The abstract WO03/106796 A2 refers to 'A method and apparatus for maintaining a panel in a closed position and releasing a panel upon application of changes resulting from a pressure change in an area adjoining the panel. The apparatus includes a latch mechanism attached to a structure having a bolt for engaging corresponding panel. The latch mechanism may be retained on the corresponding panel with the bolt engaging the structure. A pressure responsive device is provided to detect a change in pressure on one side of the panel and facilitating release of the bolt in response to a pressure change of a predetermined range or force. The latch mechanism and pressure responsive device vent to or communicate with only one side of the panel. A reservoir on one side of the panel communicates with a pressure responsive chamber of the pressure responsive device. The reservoir is generally on the same side of the panel to provide a pressure volume which is generally isolated from ambient pressure, such as during a decompression event. The method includes a method of maintaining a latch mechanism in a closed position subject to a pressure change, including sensing the pressure change on only one side of the panel.'

The abstract of WO 03/029585 A2 refers to 'An apparatus, system and method including a latching device for displaceably retaining a panel relative to a frame. The latching device includes at least a bolt which is carried on the latching device and is operatively associated with the panel to prevent disengagement of the panel. The latching device includes at least one pressure responsive device operatively coupled to the bolt to retain the bolt in a desired position and release the bolt when a predetermined pressure differential occurs relative to two, generally opposite, sides of the panel or when a pressure decrease occurs on one side of the panel.'

The abstract of US 6484449 B1 refers to an 'Access apparatus including an access device including at least one of a door and a window, the access device including at least one openable element; and opening apparatus adapted to open the at least one openable element in a presence of a pressure difference of a predefined magnitude between opposite sides of the access device.'

The abstract of GB 2419158 A refers to 'A door strike apparatus 10 for enabling opening of a door 142 in the event of a decompression condition experienced within a flight deck area includes a housing 12 supported adjacent the door 142 and a strike arm 84 movable between a locked state restricting rotation of the door 142 and an unlocked state permitting rotation of the door 142. A solenoid 52 having a lock member 54 retracted from the strike arm 84 when the strike arm 84 is in the unlocked state and engaged with the strike arm 84 when the strike arm 84 is in the locked state. The solenoid 52 is responsive to the decompression condition and selectively toggles the lock member 54 out of engagement with the strike arm 84 to permit automatic unlocking of the strike arm 84 and opening of the door under the decompression condition and into engagement with the strike arm 84 to permit selective locking of the door 142 when the decompression condition is absent. The door strike apparatus 10 may include a secondary lock mechanism to temporarily absorb the force on strike arm 84 in the decompression condition, enabling the solenoid 52 to retract the lock member 54.'

The abstract of WO 03/029591 A2 refers to 'An apparatus, system and method including a latching device for displaceably retaining a panel relative to a frame. The latching device includes at least a bolt which is carried on the latching device and is operatively associated with the panel to prevent disengagement of the panel. The latching device includes at least one pressure responsive device operatively coupled to the bolt to retain the bolt in a desired position and release the bolt when a predetermined pressure differential occurs relative to two, generally oppposite, sides of the panel or when a pressure decrease occurs on one side of the panel; An apparatus, system and method including a latching device (24) for displaceably retaining a panel (40) relative to a frame (32). The latching device includes at least a bolt (78) which is carried on the latching device and is operatively associated with the panel to prevent disengagement of the panel. The latching device includes at least one pressure responsive device (26) operatively coupled to the bolt to retain the bolt in a desired position and release the bolt when a predetermined pressure differential occurs relative to two, generally oppposite, sides of the panel or when a pressure decrease occurs on one side of the panel.'

The abstract of US 2018/346091 A1 refers to 'A flight deck barrier door for an aircraft, the flight deck barrier door including a door frame and a door panel in the door frame. The door panel has a plurality of vents. The door panel and door frame have a minimum total vented surface area of 1000 square inches.'

The abstract of JP 2909463 B1 refers to 'a structure in which a frame body is fixed to an opening part of a wall, a clearance adjusting tool 4 is nipped and fixed in a mounting clearance between the opening part of the wall and the frame body. The mounting clearance is blocked by a casing. The clearance adjusting tool 4 is provided with fixing part 8 fixing the casing blocking the mounting clearance, an adjusting screw 9 provided in the fixing part 8 so as to rotate, and a projecting part 10 connected with the fixing part 8 so as to rotate and protrude the adjusting screw 9. The clearance adjusting tool 4 arranged in the mounting clearance protrudes the projecting part 10 by the adjusting screw 9 and presses the opening part of the wall and the frame body in the mounting clearance. The frame body is fixed on a building through a set screw passing through the frame body. The casing blocking the mounting clearance is connected with the fixing part 8 of the clearance adjusting tool 4 through a connection screw.'

In one example, a privacy door assembly is provided for installation in an aircraft which aircraft has a flight deck separated from a cabin by a flight deck door, the privacy door assembly installable between the flight deck door and the cabin the privacy door assembly comprising
- a door frame comprising a first post and a second post, wherein the second post comprises a latch recess;
- a privacy door rotatably coupleable to the first post via a set of hinges, wherein the privacy door comprises
- a decompression latch arranged to engage the latch recess when the privacy door is in the closed position within the door frame and wherein,
- the decompression latch is configured to disengage from the latch recess in response to a decompression detected on a forward, side of the privacy door,
- wherein the door frame comprises a connector for coupling the door frame to an adjacent structure of the aircraft wherein the connector when coupled to the adjacent structure of the aircraft provides at least one degree of freedom of movement for the door frame with respect to the adjacent structure,
wherein the privacy door comprises a slam latch positioned to engage a slot in the first post of the door frame when the privacy door is in the open position and when the slam latch is in a first position wherein the slam latch is coupled to a lever positioned on a forward side of the privacy door and wherein the lever is operable to move the slam latch away from the first post to a second position so as to disengage the slam latch from the slot
wherein the privacy door further comprises a slam latch spring positioned to bias the slam latch toward the first post wherein the first post comprises a cylindrical striker, and wherein the cylindrical striker comprises the slot.

In a second example there is provided a privacy door system for an aircraft, which aircraft has a flight deck separated from a cabin by a flight deck door, the system comprising the privacy door assembly referred to here before disposed between the flight deck door and the cabin of the aircraft, which flight deck door is moveable between a closed position and an open position, in which closed position the flight deck door separates a flight deck of the aircraft from a cabin area of the aircraft, wherein the door frame comprises a connector for coupling the door frame to an adjacent structure of the aircraft, wherein the connector, when coupled to the adjacent structure of the aircraft, provides at least one degree of freedom of movement for the door frame with respect to the adjacent structure.

In a third example there is provided a method according to claim 8.

The features, functions, and advantages that have been discussed can be achieved independently in various examples or may be combined in yet other examples, further details of which can be seen with reference to the following description and drawings.

The illustrative examples, however, as well as a preferred mode of use, further objectives and descriptions thereof, will best be understood by reference to the following detailed description of an illustrative example of the present disclosure when read in conjunction with the accompanying Figures.
Figure 1 illustrates a perspective view of a privacy door relative to a flight deck door of an aircraft, according to an example implementation.
Figure 2 illustrates a plan view of a privacy door relative to a flight deck door of an aircraft, according to an example implementation.
Figure 3 illustrates an exploded view of a privacy door assembly, according to an example implementation.
Figure 4 illustrates an aft-facing view of a privacy door in a closed position, as indicated in Figure 2, according to an example implementation.
Figure 5 illustrates a cross-sectional view of a panel in both closed and open positions, as indicated in Figure 4, according to an example implementation.
Figure 6 illustrates an outboard-facing view of a privacy door in an open position, as indicated in Figure 2, according to an example implementation.
Figure 7 illustrates another outboard-facing view of the privacy door shown in Figure 6, according to an example implementation.
Figure 8 illustrates an aft-facing view of a privacy door in a closed position, according to an example implementation.
Figure 9 illustrates another aft-facing view of a privacy door in a closed position, according to an example implementation.
Figure 10A illustrates internal components of the decompression latch and the second post, according to an example implementation.
Figure 10B illustrates internal components of the decompression latch and the second post, according to an example implementation
Figure 11 illustrates a slip pin of a door frame coupled to a ceiling bracket of an aircraft, according to an example implementation.
Figure 12 shows a flowchart of an example method for operation of a privacy door on an aircraft, according to an example implementation.
Figure 13 shows a flowchart of an example method for establishing a privacy door relative to a flight deck door of an aircraft, according to an example implementation.

Disclosed examples will now be described more fully with reference to the accompanying Figures, in which some, but not all of the disclosed examples are shown. Indeed, several different examples may be described and should not be construed as limited to the examples set forth herein. Rather, these examples are described so that this disclosure will be thorough and complete and will fully convey the scope of the disclosure to those skilled in the art.

Examples discussed herein include systems and methods for establishing and operating a privacy door in an aircraft, relative to a flight deck door of the aircraft. The privacy door may be situated aft of the flight deck door, and may be closed whenever the flight deck door needs to be opened.

By the term "about" or "substantial" and "substantially" or "approximately", with reference to amounts or measurement values, it is meant that the recited characteristic, parameter, or value need not be achieved exactly. Rather, deviations or variations, including, for example, tolerances, measurement error, measurement accuracy limitations, and other factors known to those skilled in the art, may occur in amounts that do not preclude the effect that the characteristic was intended to provide.

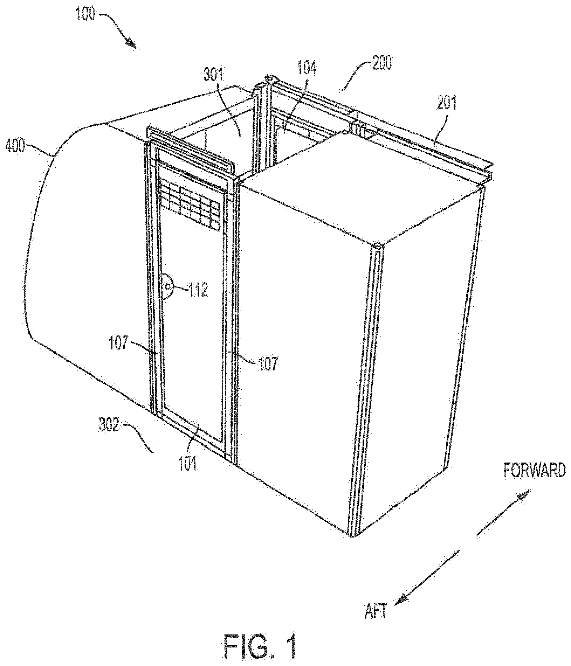

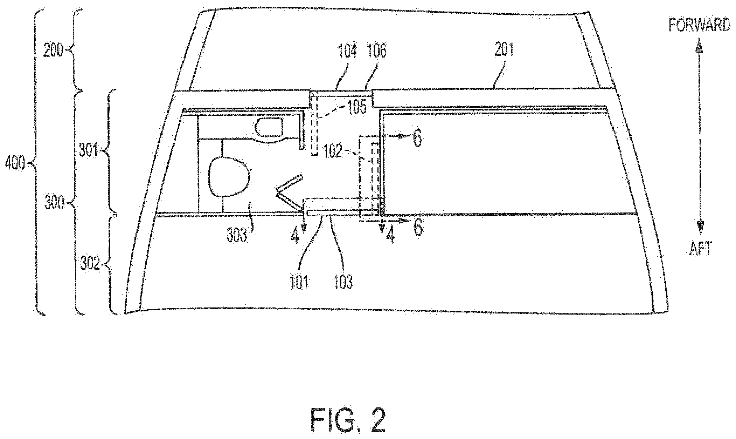

Referring now to Figures 1 and 2, a portion of an aircraft 400 is shown, immediately aft of the flight deck area 200, or cockpit. The aircraft 400 may be, for example, a passenger aircraft, and may include a flight deck door 104. As shown in Figures 1 and 2, the flight deck door 104, when in a closed position 106, separates the flight deck area 200 of the aircraft 400 from the cabin area 300 of the aircraft 400. Similarly, the forward bulkhead 201, shown in Figures 1 and 2 and discussed further below, separates the flight deck area 200 from the cabin area 300 of the aircraft 400.

As noted above, it may be desirable in some situations to maintain privacy and/or security of the flight deck area 200 and/or flight crew on the aircraft 400, including during instances where the flight deck door 104 may need to be moved to an open position 105. Accordingly, the aircraft 400 includes a privacy door 101 disposed within the cabin area 300 of the aircraft 400 and aft of the flight deck door 104. The privacy door 101, when in a closed position 103, separates the cabin area 300 into an intermediate cabin area 301 between the privacy door 101 and the flight deck door 104, and a main cabin area 302 aft of the privacy door 101. In this configuration, the privacy door 101 may be closed when the flight deck door 104 needs to be opened. The flight deck door 104 and the privacy door 101 may together be considered part of a privacy door system 100, as indicated in the perspective view of Figure 1.

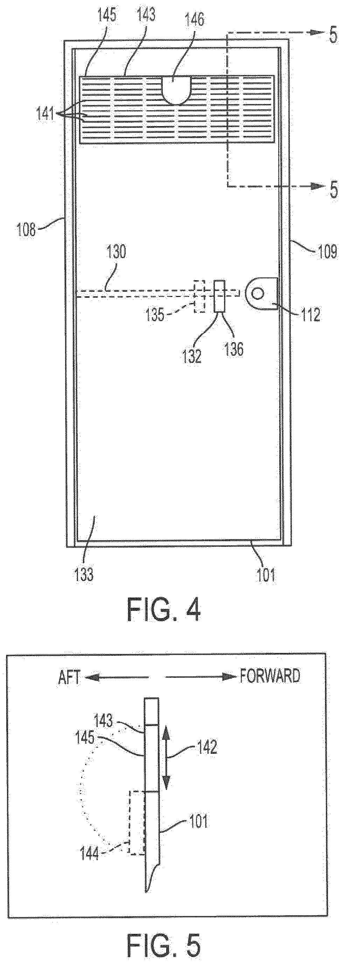

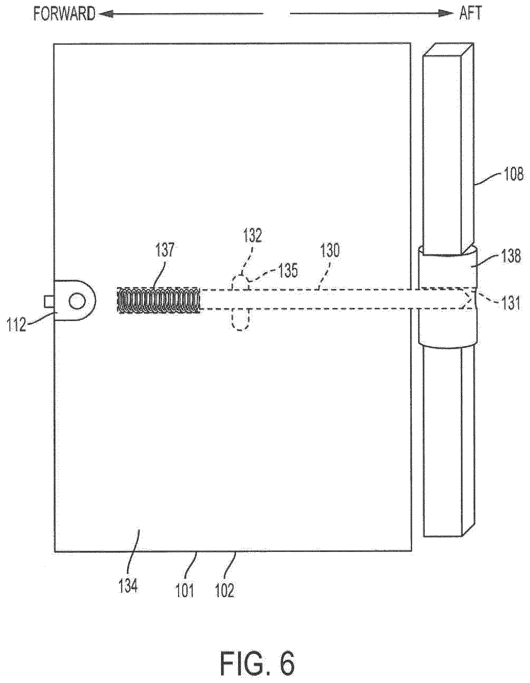

Figure 2 shows a plan view indicating both the closed positions and the open positions, in dashed lines, of the flight deck door 104 and the privacy door 101. Figure 2 shows the intermediate cabin area 301, which may include, for example, a lavatory 303. Figure 2 also indicates two cross-sectional views of the privacy door 101. The first cross-sectional view, labeled 4-4, is facing aft when the privacy door 101 is in the closed position 103, and is detailed in Figure 4. The second cross-sectional view of the privacy door is labeled 6-6, and faces in the outboard direction toward the right side of the aircraft 400, when the privacy door 101 is in the open position 102, and is detailed in Figure 6.

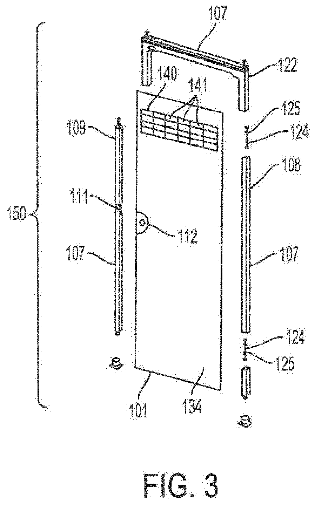

The privacy door system 100 of the aircraft 400 further includes a door frame 107 which, in conjunction with the privacy door 101, may be considered a privacy door assembly 150, as shown in the exploded view of Figure 3. As shown in Figure 3, the door frame 107 may include a first post 108 and a second post 109. The privacy door 101 may be rotatably coupled to the first post 108 via a set of hinges 124, such that the privacy door 101 is rotatable into the intermediate cabin area 301 to an open position 102, as can be seen in Figure 2.

As shown in Figure 3, a latch recess 111 may be positioned within the second post 109 of the door frame 107. The latch recess 111 is arranged to engage a decompression latch 112 of the privacy door 101 when the privacy door 101 is in the closed position 103. Further, the decompression latch 112 may be configured to disengage from the latch recess 111 in response to a decompression of the aircraft 400 detected forward of the privacy door 101.

In some implementations, the privacy door 101 may generally remain open during operation of the aircraft, as the cabin crew (e.g., flight attendants) move between the intermediate cabin area 301 and main cabin area 302, and while the flight deck door 104 generally remains closed. Accordingly, in some embodiments the set of hinges 124 may include a hinge spring 125 positioned to bias the privacy door 101 from the closed position 103 to the open position 102 when the decompression latch 112 and the latch recess 111 are disengaged. As shown in Figure 3, the set of hinges 124 may include a hinge spring 125 in each of the multiple individual hinges, or there may alternatively be a single hinge spring 125. Further, the privacy door 101 or the door frame 107 may include other springs or similar components to bias the privacy door 101 to the open position 102 when the decompression latch 112 and the latch recess 111 are disengaged.

As noted above, the decompression latch 112 may disengage from the latch recess 111 in response to a decompression of the aircraft 400 detected forward of the privacy door 101. For example, a decompression of the aircraft 400 may be detected in the flight deck area 200, which may cause higher pressure air from the main cabin area 302 to be drawn forward, toward the flight deck area 200. Because the volume of air in the main cabin area 302 may be much larger than the volume of air in the flight deck area 200, the rate of airflow in the forward direction may be quite high. In this situation, the decompression latch 112 may disengage from the latch recess 111, as further discussed below, allowing the privacy door 101 to open. The flight deck door 104 may be configured similarly. This may allow both doors to fully open during a decompression in the flight deck area 200, which may help to reduce the forces acting on the forward bulkhead 201 as a result of the decompression.

Alternatively, a decompression of the aircraft 400 may be detected aft of the privacy door 101. In this situation, it may not be necessary for the privacy door 101 or the flight deck door 104 to fully open, because a relatively smaller volume of higher pressure air from the flight deck area 200 would be moving into the relatively larger volume of the main cabin area 302. Accordingly, as shown in Figure 3, the privacy door 101 may include a vent 140, as shown in Figure 3. The vent 140 may include a plurality of openings 141 forming a fluid connection between the intermediate cabin area 301 and the main cabin area 302 when the privacy door 101 is in the closed position 103. Further, the plurality of openings 141 may include an open area that is sufficient to convey an airflow rate from the intermediate cabin area 301 to the main cabin area 302 in response to a decompression of the aircraft 400 detected aft of the privacy door. For example, the open area may be large enough to convey the higher pressure air to the area of lower pressure without imposing excessive structural loads on the privacy door 101, the door frame 107, and the adjacent structure of the aircraft 400. In this way, the privacy door 101 may not need to open in response to a decompression in the main cabin area 302.

Other arrangements are also possible. For example, the privacy door 101 may include an aperture 142 that is covered by a panel 143, as shown in Figures 4 and 5. Figure 4 shows an aft-facing view of the privacy door 101 in the closed position 103, and thus shows the forward side 133 of the privacy door 101. Figure 5 shows the cross-sectional view of the aperture 142 and panel 143 indicated in Figure 4. The aperture 142 may have an open area sufficient to convey an airflow rate from the intermediate cabin area 301 to the main cabin area 302 in response to a decompression of the main cabin area 302 when the privacy door is in the closed position 103, as discussed above. The panel 143 may be rotatably coupled to the privacy door 101 and may further include a panel decompression latch 146 configured to engage the privacy door 101 and maintain the panel 143 in the closed position 145 such that the panel 143 covers the aperture 142. In response to a decompression of the aircraft 400 detected aft of the privacy door 101, the panel decompression latch 146 is further configured to disengage from the privacy door 101, and the panel 143 may be rotatable into the main cabin area 302 from the closed position 145 to an open position 144.

For instance, Figures 4 and 5 illustrate a panel 143 that is rotatably coupled to the privacy door 101 along the panel's bottom edge, and includes a panel decompression latch 146 along its top edge. Accordingly, when the panel decompression latch 146 disengages from the privacy door 101, the panel 143 rotates aft and downward, into the main cabin area 302, as seen in Figure 5. In some embodiments, the panel 143 may include a plurality of openings 141 to facilitate normal air flow between the intermediate cabin area 301 and the main cabin area 302 when the privacy door is closed. However, the plurality of openings 141 may not have an open area sufficient to convey the airflow rate resulting from a decompression event, and thus the panel 143 will rotate to the open position 144. In other implementations, the panel 143 may be solid, without any openings. Other arrangements are also possible.

Figure 4 also illustrates a slam latch 130 that may be included in the privacy door 101, including a lever 132 that includes a second position 136, as well as a first position 135 shown in a dashed line. The slam latch 130 and lever 132 will now be discussed in more detail with respect to Figure 6.

As noted above, the view shown in of Figure 6 faces in the outboard direction toward the right side of the aircraft 400, when the privacy door 101 is in the open position 102. For clarity, some elements such as the set of hinges 124 and the second post 109 are not shown in Figure 6. As previously mentioned, the privacy door 101 may generally remain in the open position 102 during operation of the aircraft 400. Accordingly, the privacy door 101 may include a slam latch 130 positioned to engage a slot 131 in the first post 108 of the door frame 107 when the privacy door 101 is in the open position 102, and when the slam latch 130 is in a first position 135. The slam latch 130 may be located internally within the privacy door 101, and thus it is shown in a dashed line in Figure 6.

The privacy door 101 may further include a slam latch spring 137 positioned to bias the slam latch 130 toward the first post 108. Similar to the slam latch 130, the slam latch spring 137 may be contained within the privacy door 101. Other arrangements are also possible.

Further, the slam latch 130 may be coupled to a lever 132 positioned on the forward side 133 of the privacy door 101. Because the view shown in Figure 6 shows the privacy door 101 in the open position 102, it illustrates the aft side 134 of the privacy door 101. The lever 132 is therefore shown as a dashed line in Figure 6, as it is on the opposite side of the privacy door 101.

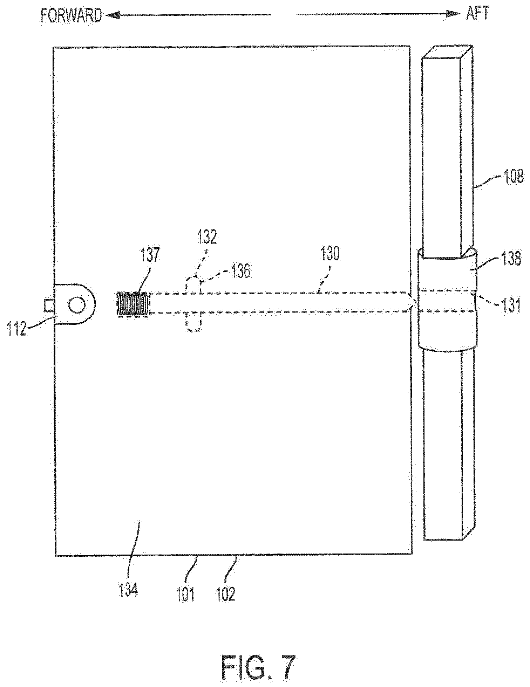

The lever 132 may be operable to move the slam latch 130 away from the first post 108 to a second position 136 so as to disengage the slam latch 130 from the slot 131. This is shown in Figure 7, which shows the same view of the privacy door 101 as that shown in Figure 6. As can be seen in Figure 7, the slam latch spring 137 is compressed as the lever 132 is moved from the first position 135 to the second position 136. Once the slam latch 130 is disengaged from the slot 131, the privacy door 101 may be rotated from the open position 102 to the closed position 103, for example.

After disengaging the slam latch 130 from the slot 131, the lever 132 may be released, and the slam latch spring 137 may bias the slam latch back toward the first post 108. This may cause the slam latch 130 to abut the first post 108 while the privacy door is rotating from the open position 102 to the closed position 103. Therefore, in some embodiments, the first post 108 may include a cylindrical striker 138, and the cylindrical striker 138 may include the slot 131, as shown in Figures 6 and 7. The cylindrical striker 138 may generally protect the first post 108 from strikes from the slam latch 130 during opening and closing of the privacy door 101. Further, in an embodiment where the first post 108 is square or rectangular in cross section, the cylindrical striker 138 may allow the privacy door 101 to rotate more smoothly, without the tip of the slam latch 130 binding on the corners of the first post 108.

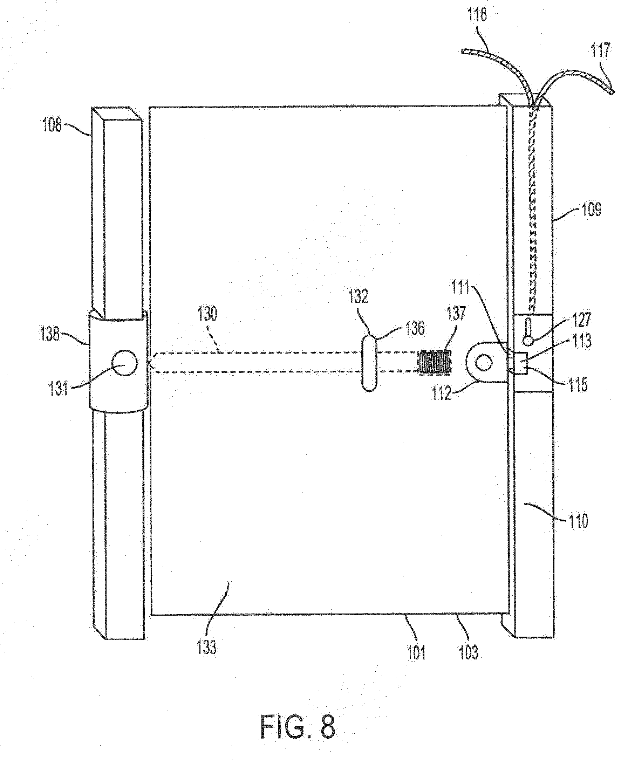

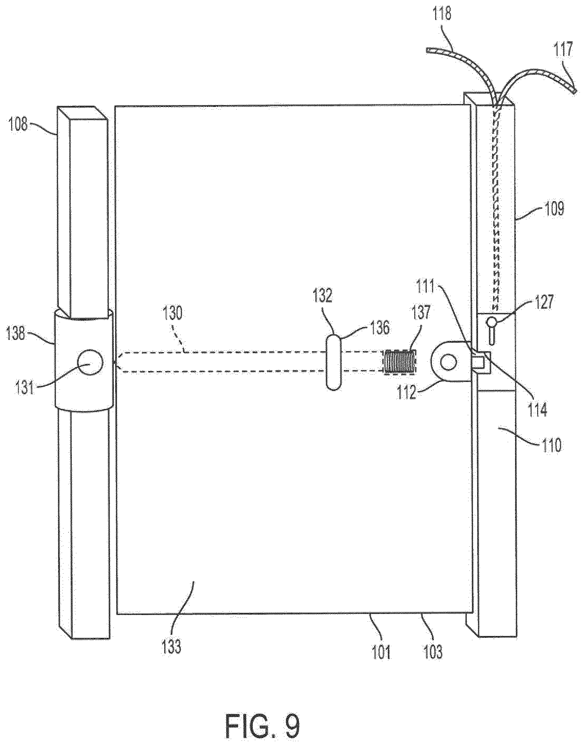

Turning now to Figures 8 and 9, and aft-facing view of the privacy door 101 in the closed position 103 is shown. Accordingly, the forward side 133 is the privacy door 101 is depicted, and the lever 132 can be seen. Further, the lever 132 is in the second position 136, as the slam latch 130 is disengaged from the slot 131. The slam latch spring 137 is compressed, and biases the slam latch 130 toward the first post 108, where the slam latch 130 abuts the cylindrical striker 138.

In some embodiments, the second post 109 includes a gate 113 movable between an open position 114, and a closed position 115. The closed position 115 of the gate 113 is shown in Figure 8, and the open position 114 can be seen in Figure 9. The gate 113 may be configured to retain the decompression latch 112 within the latch recess 111. Further, the gate 113 may be coupled to a knob 127 positioned on a forward side 110 of the second post 109, and the knob 127 may be operable to move the gate 113 to the open position 114 such that the gate 113 does not retain the decompression latch 112 in the latch recess 111. As shown in Figure 9, the gate 113 and the knob 127 have moved upward, so that the decompression latch is free to move out of the latch recess 111.

In this arrangement, with the knob 127 positioned on the forward side 110 of the second post 109, it may be possible to open the privacy door 101 from the intermediate cabin area 301. Conversely, the aft side of the second post 109 might not include any components for operating the knob 127, or the gate 113. Thus, the privacy door 101 might not be openable via a handle or knob from the main cabin area 302 when the gate 113 is in the closed position 115, which may enhance the privacy and/or security of the privacy door 101.

Nonetheless, it may be desirable to provide for the ability to open the privacy door 101 from the main cabin area 302, should the need arise. The ability to do so may be discreet, although it may be known to the cabin crew, flight crew, or others. For example, the gate 113 may be coupled to a main cabin cable 118 extending from the second post 109 to the main cabin area 302 of the aircraft 400. The main cabin cable 118 may be operable from the main cabin area 302 to move the gate 113 from the closed position 115 to the open position 114 such that the gate 113 does not retain the decompression latch 112 in the latch recess 111. For instance, the operable portion of the main cabin cable 118 may extend into the main cabin area 302 and be located somewhere that is not readily visible, such as behind a panel, or in a closet, among other possibilities.

Once the gate 113 is moved to the open position 114, the privacy door 101 can be pushed open from the main cabin area 302. In some embodiments, the hinge spring 125 may bias the privacy door 101 to the open position 102 once the gate 113 is moved to the open position 114, and decompression latch 112 is no longer engaged in the latch recess 111.

In some embodiments, it may be desirable to allow for the privacy door 101 to be opened from the flight deck area 200. In one example, the privacy door 101 may be closed during flight of the aircraft 400. For instance, the cabin crew may disengage the slam latch 130 and close the privacy door 101 behind them as they enter the main cabin area 302 and proceed with in-flight operations. This may allow the flight deck door 104 to be opened so that the pilot can enter the intermediate cabin area 301 and use the lavatory 303, for example. Once the pilot returns to the flight deck area 200 and closes the flight deck door 104, there may be no crew members in the intermediate cabin area 301 to reopen the privacy door 101 via the knob 127. Therefore, the gate 113 may be coupled to a flight deck cable 117 extending from the second post 109 to the flight deck area 200 of the aircraft 400. The flight deck cable 117 may be operable from the flight deck area 200 to move the gate 113 from the closed position 115 to the open position 114 such that the gate 113 does not retain the decompression latch 112 in the latch recess 111.

The privacy door system 100 discussed here may include one or both of the main cabin cable 118 and the flight deck cable 117. Similar to the operation of the main cabin cable 118 discussed above, moving the gate 113 to the open position 114 via the flight deck cable 117 may allow the privacy door 101 to be pushed open from the main cabin area 302. Additionally or alternatively, the hinge spring 125 may bias the privacy door 101 to the open position 102 once the gate 113 is moved to the open position 114, and decompression latch 112 is no longer engaged in the latch recess 111.

In some embodiments, the privacy door 101 may be rotated to the closed position 103, but the gate 113 may be left in the open position 114. This may allow the privacy door 101 to be closed in situations where the flight deck door 104 will not be opened. In such embodiments, the set of hinges 124 might not include a hinge spring 125 to bias the privacy door 101 to the open position 102. Alternatively, the latch recess 111 may include a minor detent to lightly engage the decompression latch 112 such that the hinge spring 125 cannot rotate the privacy door 101, but such that a crew member can push the privacy door 101 to disengage the decompression latch 112 from the detent.

In these implementations, the flight deck cable 117 may be operable from the flight deck area 200 to move the gate 113 to the closed position 115 so as to retain the decompression latch 112 within the latch recess 111 and lock the privacy door 101 in the closed position 103, to secure the intermediate cabin area 301 from the main cabin area 302. This may then allow the pilot to open the flight deck door 104.

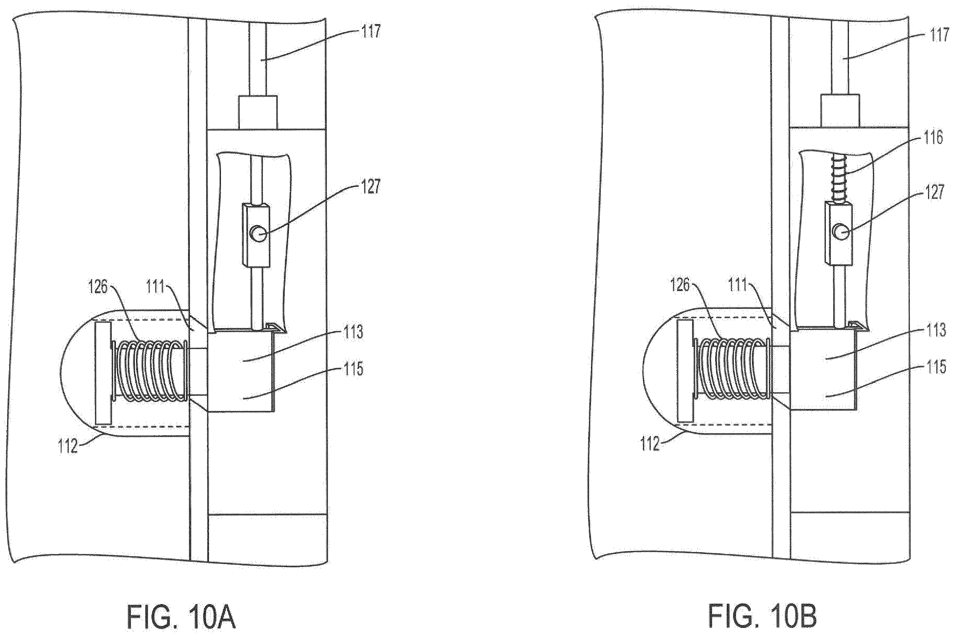

In an example embodiment shown in Figure 10A, some internal components of the decompression latch 112 and the second post 109 can be seen. For instance, the gate 113 may be movable by the flight deck cable 117 between the open position 114 and the closed position 115. With the gate 113 in the open position 114, the privacy door 101 may be closed such that the decompression latch 112 engages with the minor detent in the latch recess 111, in which position the privacy door 101 is closed but not locked by the gate 113. While the privacy door 101 is closed, the flight deck cable 117 is operable from the flight deck area 200 to move the gate 113 from the open position 114 to the closed position 115 so as to retain the decompression latch 112 in the latch recess 111 and lock the privacy door 101 in the closed position 103. With the gate 113 closed and the privacy door 101 closed, the privacy door 101 is locked to secure the intermediate cabin area 301 from the main cabin area 302. Similarly, while the privacy door 101 is open, the flight deck cable 117 is operable from the flight deck area 200 to move the gate 113 to the closed position 115, and a crew member in the main cabin area 302 may close the privacy door 101 whereupon the decompression latch 112 may retract and slide past the gate 113 into the latch recess 101 where the decompression latch 112 is retained, to lock the privacy door 101 and secure the intermediate cabin area 301 from the main cabin area 302. With the privacy door 101 locked, the flight crew may exit the flight deck area 200 into the intermediate cabin area 301. To then unlock the privacy door 101, the flight deck cable 117 is operable from the flight deck area 200 to move the gate 113 to the open position 114 that does not retain the decompression latch 112 within the latch recess 111, such that the privacy door 101 is unlocked and can be pulled open from the intermediate cabin area 301, or pushed open from the main cabin area 302, to disengage the decompression latch 112 from the minor detent in the latch recess 111.

Figure 10B shows a view an alternate implementation of the decompression latch 112 and the gate 113 in the closed position 115, including some internal components of the decompression latch 112 and the second post 109. For example, the gate 113 may additionally include a gate spring 116 positioned to bias the gate 113 into the closed position 115 so as to retain the decompression latch 112 within the latch recess 111. In some implementations, when flight crew plans to exit the flight deck area 200 and the privacy door 101 is open, a crew member in the main cabin area 302 may close the privacy door 101, whereupon the decompression latch 112 retracts and slides past the gate 113 into the latch recess 111 where the decompression latch 112 is retained to lock the privacy door 101. With the gate 113 biased into the closed position 115 and the privacy door 101 closed, the privacy door 101 remains locked to secure the intermediate cabin area 301 from the main cabin area 302, such that the flight crew may exit the flight deck area 200 into the intermediate cabin area 301. When the flight crew returns to the flight deck area 200, the flight deck cable 117 is operable from the flight deck area 200 to move the gate 113 to the open position 114, compressing the gate spring 116, such that the gate 113 does not retain the decompression latch 112 within the latch recess 111. Thereafter, and as noted in examples above, the privacy door 101 may be moved to the open position 102 via the hinge spring 125 biasing the door open (absent any detent in the latch recess 111 to engage decompression latch 112). Similarly, moving the gate 113 to the open position 114 via operation of the knob 127, or via operation of the main cabin cable 118, as discussed in the examples above, may also involve compression the gate spring 116.

As noted above, the decompression latch 112 may be configured to disengage from the latch recess 111 in response to a decompression of the aircraft 400 detected forward of the privacy door 101. In some embodiments, as shown in Figure 10A and 10B, the privacy door 101 may include a decompression spring 126 positioned to bias the decompression latch 112 toward the first post 108 so as to disengage the decompression latch 112 from the latch recess 111. For instance, the decompression spring 126 may be retained by a pin or a similar structure that is released when the forward decompression is detected, which may then allow the decompression spring 126 to bias the decompression latch 112 out of the latch recess 111.

One useful feature of the privacy door assembly 150 is that it may be possible to retrofit the door frame 107 and privacy door 101 into an existing aircraft 400. However, it may be desirable in such situations to minimize the additional structural loads that may be imposed on the aircraft 400 by the privacy door assembly 150. For instance, if the door frame 107 is connected to both the floor and ceiling of the aircraft 400 with fixed connections, then some otherwise expected deflections in the floor structure of the aircraft 400, for example, may induce additional loads at the ceiling structure, transferred by the door frame 107, that otherwise would not be present.

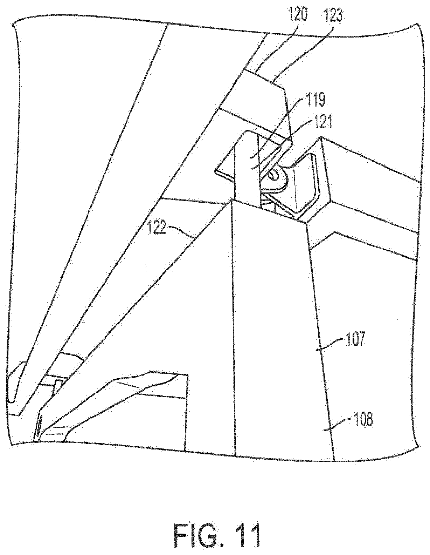

Therefore, the door frame 107 may be installed such that one or more of the connections to the aircraft 400 maintains at least one degree of freedom of movement, to reduce the load transfer along the door frame 107. For example, and with reference to Figure 11, the door frame 107 may include a connector 119 for coupling the door frame 107 to an adjacent structure 120 of the aircraft 400. The connector 119, when coupled to the adjacent structure 120 of the aircraft 400, may provide at least one degree of freedom of movement for the door frame 107 with respect to the adjacent structure 120.

For instance, as shown in the example of Figure 11, the connector 119 may include a slip pin 121 positioned at an upper end 122 of the first post 108, and the adjacent structure 120 may comprises a ceiling bracket 123 of the aircraft 400. The slip pin 121, when coupled to the ceiling bracket 123, may include at least two degrees of freedom of movement for the door frame 107 with respect to the ceiling bracket 123. In the example shown in Figure 11, the slip pin 121 is free to move both vertically and from left to right in the ceiling bracket 123. In this way, any slight deflections of the floor of the aircraft 400, where the door frame 107 may have be fixed, might not cause an additional structural load on the ceiling bracket 123, by way of the door frame 107.

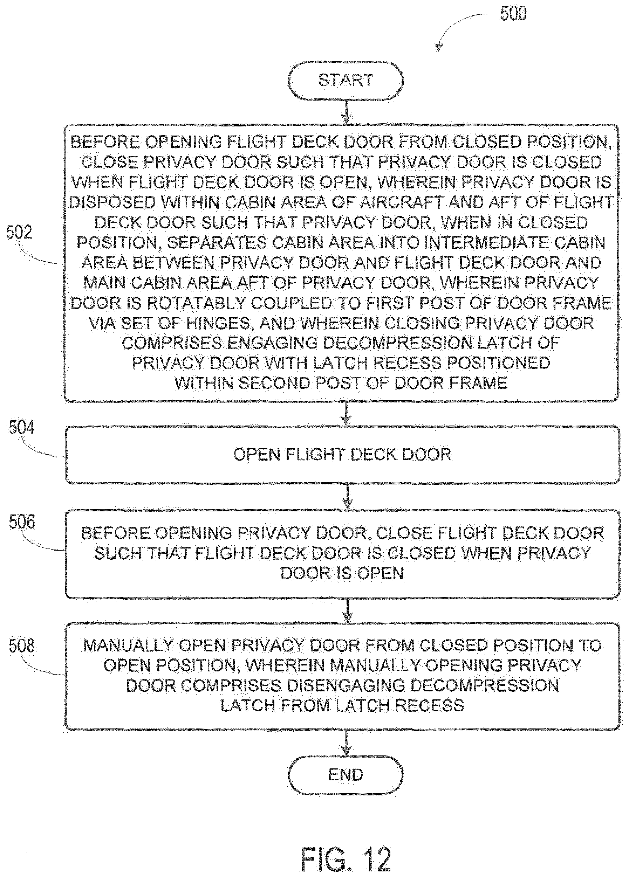

Referring now to Figure 12, a flowchart of a method 500 for operation of a privacy door on an aircraft is shown, according to an example implementation. Method 500 shown in Figure 12 presents an example of a method that, for instance, could be used with the privacy door 101 on the aircraft 400, as shown in Figures 1-11 and discussed above. It should be understood that for this and other processes and methods disclosed herein, flowcharts show functionality and operation of one possible implementation of present examples. Alternative implementations are included within the scope of the examples of the present disclosure, in which functions may be executed out of order from that shown or discussed, including substantially concurrently, depending on the functionality involved, as would be understood by those reasonably skilled in the art.

At block 502, the method 500 includes, before opening the flight deck door 104 from the closed position 106, closing the privacy door 101 such that the privacy door 101 is closed when the flight deck door 104 is open. As discussed above, the aircraft 400 includes a flight deck door 104 that, when in a closed position 106, separates a flight deck area 200 of the aircraft 400 from a cabin area 300 of the aircraft 400. The privacy door 101 is disposed within the cabin area 300 of the aircraft 400 and aft of the flight deck door 104 such that the privacy door 101, when in a closed position 103, separates the cabin area 300 into an intermediate cabin area 301 between the privacy door 101 and the flight deck door 104 and a main cabin area 302 aft of the privacy door 101. As noted previously, the privacy door 101 may be rotatably coupled to a first post 108 of a door frame 107 via a set of hinges 124. Further, closing the privacy door 101 may include engaging a decompression latch 112 of the privacy door 101 with a latch recess 111 positioned within a second post 109 of the door frame 107.

For example, during ground operations when a flight crew first enters the aircraft 400, the flight crew may enter the intermediate cabin area 301, and then close the privacy door 101 behind them before opening the flight deck door 104 to enter the flight deck 200. As another example, during flight operations, the pilot of the aircraft 400 may contact the cabin crew from the flight deck area 200 over an intercom or similar communications device, and let the cabin crew know the flight deck door 104 needs to be opened. The cabin crew may then close the privacy door 101, as discussed in the examples above.

Further, closing the privacy door 101 may include first operating the lever 132 to move the slam latch 130 away from the first post 108, from the first position 135 to the second position 136. This may disengage the slam latch 130 from the slot 131, before rotating the privacy door 101 to the closed position 103, as shown in Figure 8.

At block 504, the method 500 includes opening the flight deck door 104. For example, the flight crew may open the flight deck door 104 for the reasons discussed above, including the rotation of flight crew between flights, or if the flight crew needs to exit the flight deck area 200 during flight operations.

At block 506, the method 500 includes, before opening the privacy door 101, closing the flight deck door 104 such that the flight deck door 104 is closed when the privacy door 101 is open. In this way, the flight crew and the cabin crew can maintain a privacy and security barrier between the main cabin area 302 and the flight deck area 200 by maintaining either the flight deck door 104 or the privacy door 101 in a closed position while the other door is open.

At block 508, the method 500 includes manually opening the privacy door 101 from the closed position 103 to the open position 102. As noted above, manually opening the privacy door 101 may include disengaging the decompression latch 112 from the latch recess 111. In some implementations, the set of hinges 124 may include a hinge spring 125, which may bias the privacy door 101 to the open position after the decompression latch 112 is disengaged from the latch recess 111.

As discussed above and as shown in Figures 6-8, the privacy door 101 may include a slam latch 130 positioned to engage a slot 131 in the first post 108 of the door frame 107 when the privacy door 101 is in the open position 102 and when the slam latch 130 is in a first position 135. Accordingly, manually opening the privacy door 101 from the closed position 103 to the open position 102 may include engaging the slam latch 130 within the slot 131.

Further, the slam latch 130 may include a slam latch spring 137, and engaging the slam latch 130 within the slot 131 may include biasing the slam latch 130 toward the first post 108 and into the slot 131 via the slam latch spring 137. In some implementations, the slam latch spring 137 may not be included in the privacy door 101, and engaging the slam latch 130 within the slot 131 may alternatively include operating the lever 132 to move the slam latch to the first position 135 to engage the slam latch 130 within the slot 131.

In some embodiments, the first post 108 may include a cylindrical striker 138, which may include the slot 131. In such embodiments, closing the privacy door 101 may include biasing the slam latch 130 toward the first post 108 via the slam latch spring 137 such that the slam latch 130 abuts the cylindrical striker 138, as discussed above.

To facilitate the manual opening of the privacy door 101, the second post 109 may include a gate 113 that is movable between an open position 114 and a closed position 115 configured to retain the decompression latch 112 within the latch recess 111, as discussed above and shown in Figures 8-9. Further, the gate 113 may be coupled to a knob 127 that is positioned on a forward side 110 of the second post 109. Accordingly, in some examples, manually opening the privacy door 101 at block 508 of the method 500 may include operating the knob 127 to move the gate 113 from the closed position 115 to the open position 114 so that the gate 113 does not retain the decompression latch 112 within the latch recess 111. The privacy door 101 may then be pulled open from within the intermediate cabin area 301 using the knob 127, for example. Alternatively, the hinge spring 125 may bias the privacy door 101 to the open position 102 once the decompression latch 112 is no longer retained within the latch recess 111.

Further, although it may not be part of the normal operation of the privacy door 101, it may be possible to manually open the privacy door 101 from the main cabin area 302 as well, according to the examples discussed above. In particular, the gate 113 may be coupled to a main cabin cable 118 extending from the second post 109 to the main cabin area 302 of the aircraft 400, as shown in Figures 8-9. Thus, in some embodiments, manually opening the privacy door 101 at block 508 of the method 500 may include operating the main cabin cable 118 from the main cabin area 302 to move the gate 113 from the closed position 115 to the open position 114 in which the gate 113 does not retain the decompression latch 112 in the latch recess 111. As discussed above, the operable portion of the main cabin cable 118 may be discreetly located within the main cabin area 302.

In some implementations, the privacy door 101 may also be manually openable from the flight deck area 200, as previously discussed. For instance, the gate 113 may be coupled to a flight deck cable 117 extending from the second post 109 to the flight deck area 200 of the aircraft 400, as shown in Figures 8-9. Accordingly, in some examples, manually opening the privacy door 101 at block 508 of the method 500 may include operating the flight deck cable 117 from the flight deck area 200 to move the gate 113 to the open position 114 such that the gate 113 does not retain the decompression latch 112 in the latch recess 111. As discussed above, the privacy door 101 may then be biased to the open position 102 by the hinge spring 125, or it may be pushed or pulled open by a member of the cabin crew. Further, the gate 113 may include a gate spring 116 to bias the gate 113 to the closed position 115, as shown in Figure 10B. Accordingly, moving the gate 113 to the open position 114 in the examples above may involve compressing the gate spring 116.

Additionally, the flight deck cable 117 may also be operable to move the gate 113 to the closed position 115, as described in the examples above. Therefore, it is also possible that closing the privacy door 101 at block 502 of the method 500 may involve operating the flight deck cable 117 from the flight deck area 200 to move the gate 113 to the closed position 115 such that the gate 113 retains the decompression latch 112 in the latch recess 111, to thereby lock the privacy door 101 in the closed position 103 and secure the intermediate cabin area 301 from the main cabin area 302.

As noted above, the privacy door 101 may be configured to respond to a decompression event on the aircraft 400 during flight operations. For example, the method 500 for operation of the privacy door 101 may further include the steps of detecting a decompression of the aircraft 400 forward of the privacy door 101 when the privacy door 101 is in the closed position 103. Further, in response to the detected decompression of the aircraft 400 forward of the privacy door 101, the method 500 may include automatically disengaging the decompression latch 112 from the latch recess 111.

In some implementations, as shown in Figures 10A and 10B, the privacy door 101 may include a decompression spring 126. In such implementations, automatically disengaging the decompression latch 112 from the latch recess 111 may include biasing the decompression latch 112 toward first post 108 via the decompression spring 126 such that decompression latch 112 disengages the latch recess 111.

As mentioned in previous examples, the privacy door 101 may also be configured to respond to a decompression aft of the privacy door 101. For instance, as shown in Figures 4-5, the privacy door 101 may include a panel 143 having a panel decompression latch 146 configured to engage the privacy door 101 and maintain the panel 143 in a closed position 145 such that the panel 143 covers an aperture 142 in the privacy door 101.

In this arrangement, the method 500 for operation of the privacy door 101 may further include detecting a decompression of the aircraft 400 aft of the privacy door 101 when the privacy door 101 is in the closed position 103. In response to the detected decompression of the aircraft 400 aft of the privacy door 101, the method 500 may include disengaging the panel decompression latch 146 from the privacy door 101. For instance, the panel decompression latch 146 may disengage from the privacy door 101 in a similar manner to the decompression latch 112 discussed above.

Further, in some embodiments, the panel 143 may be rotatably coupled to the privacy door 101. In such embodiments, and in response to the detected decompression of the aircraft 400 aft of the privacy door 101, the method 500 may further include rotating the panel 143 into the main cabin area 302 to an open position 144 such that the aperture 142 conveys an airflow rate from the intermediate cabin area 301 to the main cabin area 302, as shown in Figure 5 and discussed in the examples above.

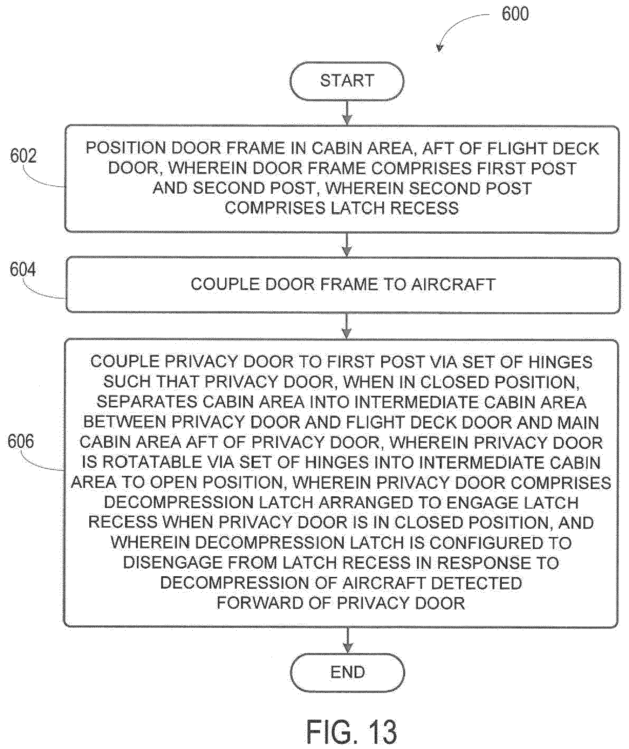

Referring now to Figure 13, a flowchart of a method 600 for establishing a privacy door relative to a flight deck door of an aircraft is shown, according to an example implementation. Method 600 shown in Figure 13 presents an example of a method that, for instance, could be performed by the privacy door system 100, as shown in Figures 1-11 and discussed above. It should be understood that for this and other processes and methods disclosed herein, flowcharts show functionality and operation of one possible implementation of present examples. In this regard, each block in the flowchart may represent a module, a segment, or a portion of program code, which includes one or more instructions executable by a processor for implementing or causing specific logical functions or steps in the process. For example, the method 600 may be implemented by one or more computing devices of a robotic assembly system. Alternative implementations are included within the scope of the examples of the present disclosure, in which functions may be executed out of order from that shown or discussed, including substantially concurrently, depending on the functionality involved, as would be understood by those reasonably skilled in the art.

At block 602, the method 600 includes positioning a door frame, such as the door frame 107 shown in Figures 1 and 3, in the cabin area 300 of the aircraft 400, aft of the flight deck door 104. The door frame 107 is a part of the privacy door system 100, as indicated in Figure 1, which also includes the flight deck door 104 and the privacy door 101, along with some or all of the additional features described in the examples above.

As previously described, the flight deck door 104, when in a closed position 106, separates a flight deck area 200 of the aircraft 400 from a cabin area 300 of the aircraft 400. Further, the door frame 107 may include a first post 108 and a second post 109, and the second post 109 may include a latch recess 111, as shown in Figure 3.

At block 604, the method 600 includes coupling the door frame 107 to the aircraft 400. To facilitate this, the door frame 107 may include a connector 119 for coupling the door frame 107 to an adjacent structure 120 of the aircraft 400. As discussed above it may be desirable to couple the door frame 107 to the aircraft 400 in such a way that the likelihood of the door frame 107 imposing additional structural loads on the aircraft 400 is reduced. Consequently, coupling the door frame 107 to the aircraft 400 may include coupling the connector 119 to the adjacent structure 120 such that the door frame 107 maintains at least one degree of freedom of movement with respect to the adjacent structure 120.

In some implementations, as shown in Figure 11, the connector 119 may include a slip pin 121 positioned at an upper end 122 of the first post 108, and the adjacent structure 120 may include a ceiling bracket 123. Accordingly, coupling the connector 119 to the adjacent structure 120 may include coupling the slip pin 121 to the ceiling bracket 123 such that the door frame 107 maintains at least two degrees of freedom of movement with respect to the ceiling bracket 123, as discussed above.

At block 606, the method 600 includes coupling the privacy door 101 to the first post 108 via a set of hinges 124 such that the privacy door 101, when in a closed position 103, separates the cabin area 300 into an intermediate cabin area 301 between the privacy door 101 and the flight deck door 104 and a main cabin area 302 aft of the privacy door 101. The privacy door 101 is rotatable via the set of hinges 124 into the intermediate cabin area 301 to an open position 102. Further, the privacy door 101 may include a decompression latch 112 as discussed in the examples above, configured to disengage from the latch recess 111 in the first post 108 in response to a decompression of the aircraft 400 detected forward of the privacy door 101.

As noted previously, and as shown in Figure 8-9, the second post 109 may include a gate 113 that is movable between an open position 114 and a closed position 115 configured to retain the decompression latch 112 within the latch recess 111. The second post 109 may further include a knob 127 for moving the gate 113 to the open position 114 and then opening the privacy door 101 from the intermediate cabin area 301. In some embodiments, it may also be desirable to be able to move the gate 113 to the open position from the main cabin area 302. Accordingly, the method 600 may further include extending a main cabin cable 118 from the gate 113 through the second post 109 and into the main cabin area 302 such that the main cabin cable 118 is operable from the main cabin area 302 to move the gate 113 from the closed position 115 to the open position 114, such that the gate 113 does not retain the decompression latch 112 in the latch recess 111. As discussed above, the main cabin cable 118 may be extended to a discreet location within the main cabin area 302.

Similarly, the method 600 may include extending a flight deck cable 117 from the gate 113 into the flight deck area 200 such that the flight deck cable 117 is operable from the flight deck area 200 to move the gate 113 to the open position 114 such that the gate 113 does not retain the decompression latch 112 in the latch recess 111.

In some embodiments, the flight deck cable 117 may be extended into the flight deck area 200 such that the flight deck cable 117 is operable from the flight deck area 200 to move the gate 113 to the closed position 115 so as to retain the decompression latch 112 in the latch recess 111 and lock the privacy door 101 in the closed position 103, securing the intermediate cabin area 301 from the main cabin area 302 aft of the privacy door 101. This functionality may be provided in addition to, or as an alternative to, the operation of the flight deck cable 117 to move the gate 113 to the open position 114.

As discussed in some of the implementations above, the privacy door 101 may include a slam latch 130, as shown in Figures 6-8. The slam latch 130 may be positioned to engage a slot 131 in the first post 108 of the door frame 107 when the privacy door 101 is in the open position 102 and the slam latch 130 is in a first position 135. Accordingly, after coupling the privacy door 101 to the first post 108 via the set of hinges 124, the method 600 may include rotating the privacy door 101 to the open position 102 and engaging the slam latch 130 within the slot 131.

In some embodiments, as previously mentioned, the method the slam latch 130 may be coupled to a lever 132 positioned on a forward side 133 of the privacy door 101. In such embodiments, the method 600 may further include operating the lever 132 to move the slam latch 130 away from the first post 108 to a second position 136. As discussed above and shown in Figures 6-7, moving the slam latch 130 to the second position 136 disengages the slam latch 130 from the slot 131.

As mentioned above, the method 600 may be performed by the privacy door system 100. In addition to the features discussed with respect to the performance of method 600, the privacy door system 100 may include additional features as discussed in the other examples above. For instance, the privacy door 101 may be rotatably coupled to the door frame 107 via a set of hinges 124. In some embodiments, the set of hinges 124 includes a hinge spring 125 positioned to bias the privacy door 101 from the closed position 103 to the open position 102 when the decompression latch 112 and the latch recess 111 are disengaged.

Further, the slam latch 130 discussed above with respect to method 600 may further include a slam latch spring 137 positioned to bias the slam latch 130 toward the first post 108. Further, the first post 108 may include a cylindrical striker 138, which may include the slot 131.

As discussed in previous examples, the privacy door system 100 may include features that may allow air to flow from an area of high pressure to an area of low pressure, in the event of a decompression of the aircraft 400. For instance, the privacy door 101 may include a decompression spring 126, as shown in Figures 10A and 10B, that is positioned to bias the decompression latch 112 toward the first post 108 so as to disengage the decompression latch 112 from the latch recess 111 in response to the decompression of the aircraft 400 detected forward of the privacy door 101.

The privacy door system 100 may also provide for airflow in the event of an aft decompression. For example, the privacy door 101 may include a vent 140, as shown in Figure 3. The vent 140 may include a plurality of openings 141 forming a fluid connection between the intermediate cabin area 301 and the main cabin area 302 when the privacy door 101 is in the closed position 103. The plurality of openings 141 may include an open area sufficient to convey an airflow rate from the intermediate cabin area 301 to the main cabin area 302 in response to a decompression of the aircraft 400 detected aft of the privacy door 101, as discussed above.

Alternatively, the privacy door 101 may include an aperture 142 having an open area sufficient to convey an airflow rate from the intermediate cabin area 301 to the main cabin area 302 in response to a decompression of the main cabin area 302 when the privacy door 101 is in the closed position 103. As shown in Figures 4-5 and discussed in above, a panel 143 may be rotatably coupled to the privacy door 101, and the panel 143 may include a panel decompression latch 146 configured to engage the privacy door 101 and maintain the panel 143 in a closed position 145 such that the panel 143 covers the aperture 142.

The panel decompression latch 146 may be configured to disengage from the privacy door 101 in response to a decompression of the aircraft 400 detected aft of the privacy door 101, as noted previously. Further, the panel 143 may be rotatable into the main cabin area 302 from the closed position 145 to an open position 144.

As discussed above, the privacy door system 100 may be established in an existing aircraft 400, through a retrofit installation of the privacy door assembly 150 shown in Figure 3. In this way, the privacy door assembly 150 may be viewed as an installation kit, which may have standard dimensions that are compatible with multiple models of aircraft 400 within a given fleet.

The privacy door assembly 150 may include a door frame 107, such as the door frame 107 shown in Figure 3, which includes a first post 108 and a second post 109, where the second post 109 comprises a latch recess 111. The privacy door assembly 150 also includes a privacy door 101 rotatably coupleable to the first post 108 via a set of hinges 124. The privacy door 101 further includes a decompression latch 112 arranged to engage the latch recess 111 when the privacy door 101 is in a closed position 103 within the door frame 107. Additionally, the decompression latch 112 may be configured to disengage from the latch recess 111 in response to a decompression detected on a forward side 133 of the privacy door 101, similar to the examples discussed above.

As above, the set of hinges 124 in the privacy door assembly 150 may include a hinge spring 125 positioned to bias the privacy door 101 from the closed position 103 to an open position 102 when the decompression latch 112 and the latch recess 111 are disengaged.

Further, the privacy door assembly 150 may include a slam latch 130 as discussed above and as generally shown in Figures 6-8. The slam latch 130 may be positioned in the privacy door 101 to engage a slot 131 in the first post 108 of the door frame 107 when the privacy door 101 is in the open position 102 and when the slam latch 130 is in a first position 135. The slam latch 130 may be coupled to a lever 132 positioned on a forward side 133 of the privacy door 101. As in previous examples, the lever 132 is operable to move the slam latch 130 away from the first post 108 to a second position 136 so as to disengage the slam latch 130 from the slot 131.

The privacy door 101 of the privacy door assembly 150 may further include a slam latch spring 137 positioned to bias the slam latch 130 toward the first post 108. As in the examples above, the first post 108 may include a cylindrical striker 138, and the cylindrical striker 138 may include the slot 131.

The privacy door assembly 150 may also include, as a part of the second post 109, a gate 113 movable between an open position 114, and a closed position 115 configured to retain the decompression latch 112 within the latch recess 111, as shown in Figures 8-9 and discussed above. The gate 113 may be coupled to a knob 127 positioned on a forward side 110 of the second post 109, and the knob 127 may be operable to move the gate 113 to the open position 114 such that the gate 113 does not retain the decompression latch 112 within the latch recess 111.

Further, the privacy door assembly 150 may include a flight deck cable 117 coupleable to the gate 113 and extendable from the second post 109 forward of the privacy door 101. The flight deck cable 117 may be operable to move the gate 113 from the open position 114 to the closed position 115 so as to retain the decompression latch 112 within the latch recess 111 and lock the privacy door 101 in the closed position 103. Additionally or alternatively, the flight deck cable 117 may be operable to move the gate 113 from the closed position 115 to the open position 114 such that the gate 113 does not retain the decompression latch 112 in the latch recess 111.

In some implementations, the privacy door assembly 150 may include a main cabin cable 118 coupleable to the gate 113 and extendable from the second post 109 aft of the privacy door 101. The main cabin cable 118 may be operable to move the gate 113 from the closed position 115 to the open position 114 such that the gate 113 does not retain the decompression latch 112 within the latch recess 111. Further, the gate 113 may include a gate spring 116 to bias the gate 113 to the closed position 115. Accordingly, moving the gate 113 to the open position 114 in the examples discussed above may include compression the gate spring 116.

The privacy door assembly 150 may also include the decompression considerations noted above. For instance, the privacy door 101 of the privacy door assembly 150 may include a decompression spring 126 as shown in Figures 10A and 10B. The decompression spring 126 may be positioned to bias the decompression latch 112 toward the first post 108 so as to disengage the decompression latch 112 from the latch recess 111 in response to the decompression detected on the forward side 133 of the privacy door 101.

The privacy door 101 of the privacy door assembly 150 may also include the vent 140, including the plurality of openings 141, as shown in Figure 3 and discussed above. In some other embodiments, the privacy door 101 may include an aperture 142, and a panel 143 rotatably coupled to the privacy door 101, as shown in Figures 4-5. The panel 143 may include a panel decompression latch 146 configured to engage the privacy door 101 and maintain the panel 143 in a closed position 145 such that the panel 143 covers the aperture 142. Further the panel 143 may be rotatable from the closed position 145 to an open position 144 on an aft side 134 of the privacy door 101. Additionally, the panel decompression latch 146 may be configured to disengage from the privacy door 101 in response to a decompression detected on the aft side 134 of the privacy door 101.

The description of the different advantageous arrangements has been presented for purposes of illustration and description, and is not intended to be exhaustive or limited to the examples in the form disclosed. Many modifications and variations will be apparent to those of ordinary skill in the art. Further, different advantageous examples may describe different advantages as compared to other advantageous examples. The example or examples selected are chosen and described in order to explain the principles of the examples, the practical application, and to enable others of ordinary skill in the art to understand the disclosure for various examples with various modifications as are suited to the particular use contemplated.

## Claims

1. A privacy door assembly (150) for installation in an aircraft (400), which aircraft (400) has a flight deck (200) separated from a cabin (300) by a flight deck door (104), the privacy door assembly (150) being installable between the flight deck door (104) and the cabin (300), the privacy door assembly (150) comprising:
- a door frame (107) comprising a first post (108) and a second post (109), wherein the second post (109) comprises a latch recess (111);
- a privacy door (101) rotatably coupleable to the first post (108) via a set of hinges (124), wherein the privacy door (101) comprises
- a decompression latch (112) arranged to engage the latch recess (111) when the privacy door (101) is in the closed position (103) within the door frame (107), and wherein,
- the decompression latch (112) is configured to disengage from the latch recess (111) in response to a decompression detected on a forward, side of the privacy door,
- wherein the door frame (107) comprises a connector (119) for coupling the door frame (107) to an adjacent structure (120) of the aircraft (400), wherein the connector (119), when coupled to the adjacent structure of the aircraft (400), provides at least one degree of freedom of movement for the door frame (107) with respect to the adjacent structure,
- wherein the privacy door (101) comprises a slam latch (130) positioned to engage a slot (131) in the first post (108) of the door frame (107) when the privacy door (101) is in the open position (102) and when the slam latch (130) is in a first position (135), wherein the slam latch (130) is coupled to a lever (132) positioned on a forward side (133) of the privacy door (101), and wherein the lever (132) is operable to move the slam latch (130) away from the first post (108) to a second position (136) so as to disengage the slam latch (130) from the slot (131),
- wherein the privacy door (101) further comprises a slam latch spring (137) positioned to bias the slam latch (130) toward the first post (108), wherein the first post (108) comprises a cylindrical striker (138), and wherein the cylindrical striker (138) comprises the slot (131).

2. The privacy door assembly (150) according to claim 1, wherein the set of hinges (124) includes a hinge spring (125) positioned to bias the privacy door (101) from the closed position (103) to the open position (102) when the decompression latch (112) and the latch recess (111) are disengaged.

3. The privacy door assembly (150) according to claims 1 or 2, wherein the privacy door (101) further comprises a decompression spring (126) positioned to bias the decompression latch (112) toward the first post (108) so as to disengage the decompression latch (112) from the latch recess (111) in response to the decompression detected on the forward side (133) of the privacy door (101).

4. The privacy door assembly (150) according to any one of the claims 1 -3, wherein the privacy door (101) further comprises:
- an aperture (142); and
- a panel (143) rotatably coupled to the privacy door (101), wherein the panel (143) comprises a panel decompression latch (146) configured to engage the privacy door (101) and maintain the panel (143) in a closed position (145) such that the panel (143) covers the aperture (142), wherein the panel (143) is rotatable from the closed position (145) to an open position (144) on an aft side of the privacy door, and wherein the panel decompression latch is further configured to disengage from the privacy door in response to a decompression detected on the aft side (134) of the privacy door (101).

5. A privacy door system (100) for an aircraft (400), which aircraft (400) has a flight deck (200) separated from a cabin (300) by a flight deck door (104
), the system (100) comprising the privacy door assembly (150) according to any of the preceding claims disposed between the flight deck door (200) and the cabin (300) of the aircraft (400), which flight deck door (104) is moveable between a closed position (106) and an open position, in which closed position (106) the flight deck door (104 ) separates a flight deck (200) of the aircraft (400) from a cabin area (300) of the aircraft (400), wherein the door frame (107) comprises a connector (119) for coupling the door frame (107) to an adjacent structure (120) of the aircraft (400), wherein the connector (119), when coupled to the adjacent structure (120) of the aircraft (400), provides at least one degree of freedom of movement for the door frame (107) with respect to the adjacent structure (120) .

6. The privacy door system (100) according to claim 5, wherein the privacy door (101) further comprises a vent (140) having a plurality of openings (141) forming a fluid connection between an intermediate cabin area (301) and a main cabin area (302) when the privacy door (101) is in the closed position, and wherein the plurality of openings (141) comprise an open area sufficient to convey an airflow rate from the intermediate cabin area (301) to the main cabin area (302) in response to a decompression of the aircraft (400) detected aft of the privacy door (101).

7. The privacy door system (100) according to claims 5 or 6, wherein the aperture (142) in the privacy door (101) has an open area sufficient to convey an airflow rate from the intermediate cabin area (301) to the main cabin area (302) in response to a decompression of the main cabin area (302) when the privacy door (101) is in the closed position (103).

8. A method for establishing a privacy door (101) relative to a flight deck door (104) of an aircraft (400), wherein the flight deck door (104), when in a closed position (103), separates a flight deck area (200) of the aircraft (400) from a cabin area (300) of the aircraft (400), the method comprising:
- positioning a door frame (107) in the cabin area (300) aft of the flight deck door (104), wherein the door frame (107) comprises a first post (108) and a second post, and wherein the second post (109) comprises a latch recess (111);
- coupling the door frame (107) to the aircraft (400); and
- coupling the privacy door (101) to the first post (108) via a set of hinges (124) such that the privacy door (101), when in a closed position (103), separates the cabin area (300) into an intermediate cabin area (301) between the privacy door (101) and the flight deck door (104) and a main cabin area (302) aft of the privacy door (101), wherein the privacy door (101) is rotatable via the set of hinges (124) into the intermediate cabin area (301) to an open position (102), wherein the privacy door (101) comprises a decompression latch (112) arranged to engage the latch recess (111) when the privacy door (101) is in the closed position (103), and wherein the decompression latch (112) is configured to disengage from the latch recess (111) in response to a decompression of the aircraft (400) detected forward of the privacy door (101),
wherein the door frame (107) comprises a connector (119) for coupling the door frame (107) to an adjacent structure (120) of the aircraft (400), and wherein coupling the door frame (107) to the aircraft (400) comprises coupling the connector (119) to the adjacent structure (120) such that the door frame (107) maintains at least one degree of freedom of movement with respect to the adjacent structure (120), wherein the privacy door (101) comprises a slam latch (130) positioned to engage a slot (131) in the first post (108) of the door frame (107) when the privacy door (101) is in the open position (102) and when the slam latch (130) is in a first position (135), wherein the slam latch (130) is coupled to a lever (132) positioned on a forward side (133) of the privacy door (101), and wherein the lever (132) is operable to move the slam latch (130) away from the first post (108) to a second position (136) so as to disengage the slam latch (130) from the slot (131),
wherein the privacy door (101) further comprises a slam latch spring (137) positioned to bias the slam latch (130) toward the first post (108), wherein the first post (108) comprises a cylindrical striker (138), and wherein the cylindrical striker (138) comprises the slot (131).

9. The method according to claim 8, wherein the second post (109) includes a gate (113) movable between an open position (114), and a closed position (115) configured to retain the decompression latch (112) within the latch recess (111), the method further comprising:
- extending a flight deck cable (117) from the gate (113) into the flight deck area (200) such that the flight deck cable (117) is operable from the flight deck area (200) to move the gate (113) to the closed position (115) so as to retain the decompression latch(112) in the latch recess (111) and lock the privacy door (101) in the closed position (115), securing the intermediate cabin area (301) from the main cabin area (302) aft of the privacy door (101).

10. The method according to claim 8, wherein the second post (109) includes a gate (113) movable between an open position (114), and a closed position (115) configured to retain the decompression latch (112) within the latch recess (111),
the method further comprising: extending a flight deck cable (117) from the gate (113) into the flight deck area (200) such that the flight deck cable (117) is operable from the flight deck area (200) to move the gate (113) to the open position (114) such that the gate (113) does not retain the decompression latch (112) in the latch recess (111),
and preferably further comprising extending a main cabin cable (118) from the gate (113) through the second post (109) and into the main cabin area (302)such that the main cabin cable (118) is operable from the main cabin area (302) to move the gate (113)from the closed position (115) to the open position (114) such that the gate (113) does not retain the decompression latch (112) in the latch recess (111), to enable the privacy door (101) to be opened from the main cabin area (302).

11. The method according to claim 10, wherein the connector (119) comprises a slip pin (121) positioned at an upper end of the first post (108) and wherein the adjacent structure (120) comprises a ceiling bracket (123), and wherein coupling the connector (119) to the adjacent structure (120) comprises coupling the slip pin (121) to the ceiling bracket (123) such that the door frame (107) maintains at least two degrees of freedom of movement with respect to the ceiling bracket (123).

12. The method according to any one of the claims 8-11, the method further comprising: after coupling the privacy door (101) to the first post (108) via the set of hinges (124), rotating the privacy door (101) to the open position (102)
and engaging the slam latch (130) within the slot (131).

13. The method according to any one of the claims 8-12, for establishing a privacy door (101|) relative to a flight deck door (104) of an aircraft (400), using a privacy door assembly (150) according to any of the preceding claims 1-4 or a privacy door system (100) according to any of the preceding claims 5-7.

## Patentansprüche

1. Privatsphäre-Tür-Anordnung (150) zur Installation in einem Flugzeug (400), wobei das Flugzeug (400) ein Flugdeck (200) aufweist, das durch eine Flugdeck-Tür (104) von einer Kabine (300) getrennt ist, wobei die Privatsphäre-Tür-Anordnung (150) zwischen der Flugdeck-Tür (104) und der Kabine (300) installiert werden kann, wobei die Privatsphäre-Tür-Anordnung (150) Folgendes umfasst:
- einen Türrahmen (107) mit einem ersten Pfosten (108) und einem zweiten Pfosten (109), wobei der zweite Pfosten (109) eine Verriegelungsaussparung (111) umfasst; und
- eine Privatsphäre-Tür (101), die über einen Satz von Scharnieren (124) drehbar mit dem ersten Pfosten (108) gekoppelt werden kann, wobei die Privatsphäre-Tür (101) Folgendes umfasst:
- eine Dekompressionsverriegelung (112), die so ausgerichtet ist, dass sie mit der Verriegelungsaussparung (111) eingreift, wenn die Privatsphäre-Tür (101) sich in der geschlossenen Position (103) in dem Türrahmen (107) befindet, und wobei
- die Dekompressionsverriegelung (112) so konfiguriert ist, dass sie sich als Reaktion darauf, dass auf einer Vorderseite der Privatsphäre-Tür eine Dekompression erfasst wurde, von der Verriegelungsaussparung (111) löst,
- wobei der Türrahmen (107) einen Verbinder (119) zum Koppeln des Türrahmens (107) mit einer angrenzenden Struktur (120) des Flugzeugs (400) umfasst, wobei der Verbinder (119), wenn er mit der angrenzenden Struktur des Flugzeugs (400) gekoppelt ist, wenigstens ein Grad von Bewegungsfreiheit für den Türrahmen (107) in Bezug auf die angrenzende Struktur bereitstellt,
- wobei die Privatsphäre-Tür (101) eine Federverriegelung (130) umfasst, die so angeordnet ist, dass sie in einen Schlitz (131) in dem ersten Pfosten (108) des Türrahmens (107) eingreift, wenn die Privatsphäre-Tür (101) sich in der offenen Position (102) befindet und wenn die Federverriegelung (130) sich in einer ersten Position (135) befindet, wobei die Federverriegelung (130) mit einem Hebel (132) gekoppelt ist, der an einer Vorderseite (133) der Privatsphäre-Tür (101) angeordnet ist, und wobei der Hebel (132) betätigt werden kann, um die Federverriegelung (130) von dem ersten Pfosten (108) weg in eine zweite Position (136) zu bewegen, um so den Eingriff der Federverriegelung (130) mit dem Schlitz (131) zu lösen,
- wobei die Privatsphäre-Tür (101) weiterhin eine Federverriegelungsfeder (137) umfasst, die so angeordnet ist, dass sie die Federverriegelung (130) in Richtung des ersten Pfostens (108) vorspannt, wobei der erste Pfosten (108) eine zylindrische Schließplatte (138) umfasst, und wobei die zylindrische Schließplatte (138) den Schlitz (131) umfasst.

2. Privatsphäre-Tür-Anordnung (150) nach Anspruch 1, wobei der Satz von Scharnieren (124) eine Scharnierfeder (125) enthält, die so angeordnet ist, dass sie die Privatsphäre-Tür (101) von der geschlossenen Position (103) in die offene Position (102) vorspannt, wenn die Dekompressionsverriegelung (112) und die Verriegelungsaussparung (111) nicht miteinander in Eingriff sind.

3. Privatsphäre-Tür-Anordnung (150) nach Anspruch 1 oder 2, wobei die Privatsphäre-Tür (101) weiterhin eine Dekompressionsfeder (126) umfasst, die so angeordnet ist, dass sie die Dekompressionsverriegelung (112) in Richtung des ersten Pfostens (108) vorspannt, um als Reaktion darauf, dass an der Vorderseite (133) der Privatsphäre-Tür (101) eine Dekompression erfasst wurde, den Eingriff der Dekompressionsverriegelung (112) mit der Verriegelungsaussparung (111) zu lösen.

4. Privatsphäre-Tür-Anordnung (150) nach einem der Ansprüche 1 bis 3, wobei die Privatsphäre-Tür (101) weiterhin Folgendes umfasst:
- eine Öffnung (142); und
- eine Platte (143), die drehbar mit der Privatsphäre-Tür (101) gekoppelt ist, wobei die Platte (143) eine Plattendekompressionsverriegelung (146) umfasst, die dazu konfiguriert ist, mit der Privatsphäre-Tür (101) einzugreifen und die Platte (143) in einer geschlossenen Position (145) zu halten, so dass die Platte (143) die Öffnung (142) abdeckt, wobei die Platte (143) aus einer geschlossenen Position (145) in eine offene Position (144) auf einer Hinterseite der Privatsphäre-Tür drehbar ist, und wobei die Plattendekompressionsverriegelung weiterhin dazu konfiguriert ist, als Reaktion darauf, dass an der Hinterseite (134) der Privatsphäre-Tür (101) eine Dekompression erfasst wurde, ihren Eingriff mit der Privatsphäre-Tür zu lösen.

5. Privatsphäre-Tür-System (100) für ein Flugzeug (400), wobei das Flugzeug (400) ein Flugdeck (200) aufweist, das durch eine Flugdeck-Tür (104) von einer Kabine (300) getrennt ist, wobei das System (100) die Privatsphäre-Tür-Anordnung (150) nach einem der vorhergehenden Ansprüche umfasst, welche zwischen der Flugdeck-Tür (104) und der Kabine (300) des Flugzeugs (400) angeordnet ist, wobei die Flugdeck-Tür (104) zwischen einer geschlossenen Position (106) und einer offenen Position beweglich ist, wobei die Flugdeck-Tür (104) in der geschlossenen Position (106) das Flugdeck (200) des Flugzeugs (400) von einem Kabinenbereich (300) des Flugzeugs (400) trennt, wobei der Türrahmen (107) einen Verbinder (119) zum Koppeln des Türrahmens (107) mit einer angrenzenden Struktur (120) des Flugzeugs (400) umfasst, wobei der Verbinder (119), wenn er mit der angrenzenden Struktur (120) des Flugzeugs (400) gekoppelt ist, wenigstens einen Grad von Bewegungsfreiheit für den Türrahmen (107) in Bezug auf die angrenzende Struktur (120) bereitstellt.

6. Privatsphäre-Tür-System (100) nach Anspruch 5, wobei die Privatsphäre-Tür (101) weiterhin eine Belüftung (140) umfasst, die eine Vielzahl von Perforationen (141) aufweist, die eine Fluidverbindung zwischen einem Zwischenkabinenbereich (301) und einem Hauptkabinenbereich (302) bilden, wenn die Privatsphäre-Tür (101) sich in der geschlossenen Position befindet, und wobei die Vielzahl von Perforationen (141) einen offenen Bereich umfasst, der ausreichend ist, um als Reaktion darauf, dass hinter der Privatsphäre-Tür (101) eine Dekompression des Flugzeugs (400) erfasst wurde, einen Luftstromdurchsatz von dem Zwischenkabinenbereich (301) in den Hauptkabinenbereich (302) bereitzustellen.

7. Privatsphäre-Tür-System (100) nach Anspruch 5 oder 6, wobei die Öffnung (142) in der Privatsphäre-Tür (101) einen offenen Bereich aufweist, der ausreichend ist, um einen Luftstromdurchsatz von dem Zwischenkabinenbereich (301) in den Hauptkabinenbereich (302) bereitzustellen, als Reaktion auf eine Dekompression des Hauptkabinenbereichs (302), wenn die Privatsphäre-Tür (101) sich in der geschlossenen Position (103) befindet.

8. Verfahren zum Einrichten einer Privatsphäre-Tür (101) in Bezug auf eine Flugdeck-Tür (104) eines Flugzeugs (400), wobei die Flugdeck-Tür (104) in einer geschlossenen Position (103) einen Flugdeck-Bereich (200) des Flugzeugs (400) von einem Kabinenbereich (300) des Flugzeugs (400) trennt, wobei das Verfahren Folgendes umfasst:
- Anordnen eines Türrahmens (107) in dem Kabinenbereich (300) hinter der Flugdeck-Tür (104), wobei der Türrahmen (107) einen ersten Pfosten (108) und einen zweiten Pfosten umfasst, und wobei der zweite Pfosten (109) eine Verriegelungsaussparung (111) umfasst;
- Koppeln des Türrahmens (107) mit dem Flugzeug (400); und
- Koppeln der Privatsphäre-Tür (101) über einen Satz von Scharnieren (124) mit dem ersten Pfosten (108), so dass die Privatsphäre-Tür (101) in einer geschlossenen Position (103) den Kabinenbereich (300) in einen zwischen der Privatsphäre-Tür (101) und der Flugdeck-Tür (104) befindlichen Zwischenkabinenbereich (301) und einen Hauptkabinenbereich (302) hinter der Privatsphäre-Tür (101) trennt, wobei die Privatsphäre-Tür (101) über den Satz von Scharnieren (124) in den Zwischenkabinenbereich (301) in eine offene Position (102) drehbar ist, wobei die Privatsphäre-Tür (101) eine Dekompressionsverriegelung (112) umfasst, die so ausgerichtet ist, dass sie mit der Verriegelungsaussparung (111) eingreift, wenn die Privatsphäre-Tür (101) sich in der geschlossenen Position (103) befindet, und wobei die Dekompressionsverriegelung (112) so konfiguriert ist, dass sie sich als Reaktion darauf, dass vor der Privatsphäre-Tür (101) eine Dekompression des Flugzeugs (400) erfasst wurde, von der Verriegelungsaussparung (111) löst,
wobei der Türrahmen (107) einen Verbinder (119) zum Koppeln des Türrahmens (107) mit einer angrenzenden Struktur (120) des Flugzeugs (400) umfasst, und wobei das Koppeln des Türrahmens (107) mit dem Flugzeug (400) ein Koppeln des Verbinders (119) mit der angrenzenden Struktur (120) umfasst, so dass der Türrahmen (107) wenigstens einen Grad an Bewegungsfreiheit in Bezug auf die angrenzende Struktur (120) behält,
wobei die Privatsphäre-Tür (101) eine Federverriegelung (130) umfasst, die so angeordnet ist, dass sie in einen Schlitz (131) in dem ersten Pfosten (108) des Türrahmens (107) eingreift, wenn die Privatsphäre-Tür (101) sich in der offenen Position (102) befindet und wenn die Federverriegelung (130) sich in einer ersten Position (135) befindet, wobei die Federverriegelung (130) mit einem Hebel (132) gekoppelt ist, der an einer Vorderseite (133) der Privatsphäre-Tür (101) angeordnet ist, und wobei der Hebel (132) betätigt werden kann, um die Federverriegelung (130) von dem ersten Pfosten (108) weg in eine zweite Position (136) zu bewegen, um so den Eingriff der Federverriegelung (130) mit dem Schlitz (131) zu lösen,
wobei die Privatsphäre-Tür (101) weiterhin eine Federverriegelungsfeder (137) umfasst, die so angeordnet ist, dass sie die Federverriegelung (130) in Richtung des ersten Pfostens (108) vorspannt, wobei der erste Pfosten (108) eine zylindrische Schließplatte (138) umfasst, und wobei die zylindrische Schließplatte (138) den Schlitz (131) umfasst.

9. Verfahren nach Anspruch 8, wobei der zweite Pfosten (109) einen Schieber (113) aufweist, der zwischen einer offenen Position (114) und einer geschlossenen Position (115), die dazu konfiguriert ist, die Dekompressionsverriegelung (112) innerhalb der Verriegelungsaussparung (111) zu halten, beweglich ist, wobei das Verfahren weiterhin Folgendes umfasst:
- Erstrecken eines Flugdeckkabels (117) von dem Schieber (113) in den Flugdeck-Bereich (200), so dass das Flugdeckkabel (117) von dem Flugdeck-Bereich (200) aus betätigt werden kann, um den Schieber (113) in die geschlossene Position (115) zu bewegen, um die Dekompressionsverriegelung (112) in der Verriegelungsaussparung (111) zu halten und die Privatsphäre-Tür (101) in der geschlossenen Position (115) zu verriegeln, wodurch der Zwischenkabinenbereich (301) von dem Hauptkabinenbereich (302) hinter der Privatsphäre-Tür (101) gesichert wird.

10. Verfahren nach Anspruch 8, wobei der zweite Pfosten (109) einen Schieber (113) aufweist, der zwischen einer offenen Position (114) und einer geschlossenen Position (115), die dazu konfiguriert ist, die Dekompressionsverriegelung (112) innerhalb der Verriegelungsaussparung (111) zu halten, beweglich ist,
wobei das Verfahren weiterhin Folgendes umfasst: Erstrecken eines Flugdeckkabels (117) von dem Schieber (113) in den Flugdeck-Bereich (200), so dass das Flugdeckkabel (117) von dem Flugdeck-Bereich (200) aus betätigt werden kann, um den Schieber (113) in die offene Position (114) zu bewegen, so dass der Schieber (113) die Dekompressionsverriegelung (112) nicht in der Verriegelungsaussparung (111) hält,
und weiterhin vorzugsweise Folgendes umfasst: Erstrecken eines Hauptkabinenkabels (118) von dem Schieber (113) durch den zweiten Pfosten (109) und in den Hauptkabinenbereich (302), so dass das Hauptkabinenkabel (118) von dem Hauptkabinenbereich (302) aus betätigt werden kann, um den Schieber (113) von der geschlossenen Position (115) in die offene Position (114) zu bewegen, so dass der Schieber (113) die Dekompressionsverriegelung (112) nicht in der Verriegelungsaussparung (111) hält, um zu ermöglichen, dass die Privatsphäre-Tür (101) von dem Hauptkabinenbereich (302) aus geöffnet werden kann.

11. Verfahren nach Anspruch 10, wobei der Verbinder (119) einen Gleistift (121) umfasst, der an einem oberen Ende des ersten Pfostens (108) angeordnet ist, und wobei die angrenzende Struktur (120) eine Deckenhalterung (123) umfasst, und wobei das Koppeln des Verbinders (119) mit der angrenzenden Struktur (120) ein Koppeln des Gleitstifts (121) mit der Deckenhalterung (123) umfasst, so dass der Türrahmen (107) wenigstens zwei Grad an Bewegungsfreiheit in Bezug auf die Deckenhalterung (123) behält.

12. Verfahren nach einem der Ansprüche 8 bis 11, wobei das Verfahren weiterhin Folgendes umfasst: nach dem Koppeln der Privatsphäre-Tür (101) über den Satz von Scharnieren (124) mit dem ersten Pfosten (108), Drehen der Privatsphäre-Tür (101) in die offene Position (102); und Eingreifen der Federverriegelung (130) innerhalb des Schlitzes (131).

13. Verfahren nach einem der Ansprüche 8 bis 12 zum Einrichten einer Privatsphäre-Tür (101) in Bezug auf eine Flugdeck-Tür (104) eines Flugzeugs (400), und zwar unter Verwendung einer Privatsphäre-Tür-Anordnung (150) nach einem der vorhergehenden Ansprüche 1 bis 4 oder eines Privatsphäre-Tür-Systems (100) nach einem der vorhergehenden Ansprüche 5 bis 7.

## Revendications

1. Ensemble formant porte de confidentialité (150) destiné à être installé dans un aéronef (400), lequel aéronef (400) présente un poste de pilotage (200) séparé d'une cabine (300) par une porte de poste de pilotage (104), l'ensemble formant porte de confidentialité (150) pouvant être installé entre la porte de poste de pilotage (104) et la cabine (300), l'ensemble formant porte de confidentialité (150) comprenant :
- un cadre de porte (107) comprenant un premier montant (108) et un deuxième montant (109), ledit deuxième montant (109) comprenant un évidement pour verrou (111), et
- une porte de confidentialité (101) pouvant être couplée pivotante au premier montant (108) grâce à un ensemble de charnières (124), ladite porte de confidentialité (101) comprenant :
- un verrou de décompression (112) agencé pour s'introduire dans l'évidement pour verrou (111) lorsque la porte de confidentialité (101) est en position fermée (103) au sein du cadre de porte (107), et dans lequel
- le verrou de décompression (112) est conçu pour se dégager de l'évidement pour verrou (111) suite à une décompression détectée sur le côté avant (133) par rapport à la porte de confidentialité (101), et
- dans lequel le cadre de porte (107) comprend un connecteur (119) permettant de coupler le cadre de porte (107) à une structure adjacente (120) de l'aéronef (400), ledit connecteur (119), une fois couplé à la structure adjacente de l'aéronef (400), assurant au moins un degré de liberté de mouvement au cadre de porte (107) par rapport à la structure adjacente,
- dans lequel la porte de confidentialité (101) comprend un verrou à ressort (130) disposé de manière à s'introduire dans une fente (131) prévue dans le premier montant (108) du cadre de porte (107) lorsque la porte de confidentialité (101) est en position ouverte (102) et lorsque le verrou à ressort (130) est dans une première position (135), ledit verrou à ressort (130) étant couplé à une manette (132) disposée sur le côté avant (133) par rapport à la porte de confidentialité (101), et ladite manette (132) pouvant être actionnée pour faire sortir le verrou à ressort (130) du premier montant (108) afin qu'il prenne une deuxième position (136) pour ainsi dégager le verrou à ressort (130) de la fente (131),
- dans lequel la porte de confidentialité (101) comprend en outre un ressort de verrou à ressort (137) disposé pour solliciter le verrou à ressort (130) vers le premier montant (108), ledit premier montant (108) comprenant une gâche cylindrique (138), ladite gâche cylindrique (138) comprenant la fente (131).

2. Ensemble formant porte de confidentialité (150) selon la revendication 1, dans lequel l'ensemble de charnières (124) comporte un ressort de charnière (125) disposé pour solliciter la porte de confidentialité (101) de la position fermée (103) à une position ouverte (102) lorsque le verrou de décompression (112) et l'évidement pour verrou (111) sont dégagés l'un de l'autre.

3. Ensemble formant porte de confidentialité (150) selon la revendication 1 ou 2, dans lequel la porte de confidentialité (101) comprend en outre un ressort de décompression (126) disposé pour solliciter le verrou de décompression (112) vers le premier montant (108) de façon à dégager le verrou de décompression (112) de l'évidement pour verrou (111) suite à la décompression détectée sur le côté avant (133) par rapport à la porte de confidentialité (101).

4. Ensemble formant porte de confidentialité (150) selon l'une quelconque des revendications 1 à 3, dans lequel la porte de confidentialité (101) comprend en outre :
- une ouverture (142), et
- un panneau (143) couplé pivotant à la porte de confidentialité (101), ledit panneau (143) comprenant un verrou de décompression de panneau (146) conçu pour coopérer avec la porte de confidentialité (101) et maintenir le panneau (143) en position fermée (145) de façon que le panneau (143) couvre l'ouverture (142), ledit panneau (143) pouvant pivoter de la position fermée (145) à une position ouverte (144) sur un côté arrière de la porte de confidentialité, et ledit verrou de décompression de panneau étant conçu en outre pour se dégager de la porte de confidentialité suite à une décompression détectée sur le côté arrière (134) par rapport à la porte de confidentialité (101).

5. Système formant porte de confidentialité (100) destiné à un aéronef (400), lequel aéronef (400) présente un poste de pilotage (200) séparé d'une cabine (300) par une porte de poste de pilotage (101), le système (100) comprenant l'ensemble formant porte de confidentialité (150) selon l'une quelconque des revendications précédentes disposé entre la porte de poste de pilotage (200) et la cabine (300) de l'aéronef (400), laquelle porte de poste de pilotage (200) est déplaçable entre une position fermée (106) et une position ouverte, dans laquelle position fermée (106) la porte de poste de pilotage (101) sépare le poste de pilotage (200) de l'aéronef (400) d'une section cabine (300) de l'aéronef (400), ledit cadre de porte (107) comprenant un connecteur (119) permettant de coupler le cadre de porte (107) à une structure adjacente (120) de l'aéronef (400), ledit connecteur (119), une fois couplé à la structure adjacente (120) de l'aéronef (400), assurant au moins un degré de liberté de mouvement au cadre de porte (107) par rapport à la structure adjacente (120).

6. Système formant porte de confidentialité (100) selon la revendication 5, dans lequel la porte de confidentialité (101) comprend en outre un dispositif d'aération (140) possédant une pluralité de perforations (141) formant une liaison fluidique entre une section cabine intermédiaire (301) et une section cabine principale (302) lorsque la porte de confidentialité (101) est en position fermée, et dans lequel la pluralité de perforations (141) comprennent une zone ouverte suffisante pour assurer un débit d'air, de la section cabine intermédiaire (301) vers la section cabine principale (302), suite à une décompression de l'aéronef (400) détectée sur l'arrière par rapport à la porte de confidentialité (101).

7. Système formant porte de confidentialité (100) selon la revendication 5 ou 6, dans lequel l'ouverture (142) ménagée dans la porte de confidentialité (101) présente une zone ouverte suffisante pour assurer un débit d'air, de la section cabine intermédiaire (301) vers la section cabine principale (302), suite à une décompression de la section cabine principale (302) lorsque la porte de confidentialité (101) est en position fermée (103).

8. Procédé d'établissement d'une porte de confidentialité (101) par rapport à la porte de poste de pilotage (104) d'un aéronef (400), ladite porte de poste de pilotage (104), en position fermée (103), séparant une section poste de pilotage (200) de l'aéronef (400) d'une section cabine (300) de l'aéronef (400), le procédé comprenant :
- la mise en place d'un cadre de porte (107) dans la section cabine (300), sur l'arrière par rapport à la porte de poste de pilotage (104), ledit cadre de porte (107) comprenant un premier montant (108) et un deuxième montant, et ledit deuxième montant (109) comprenant un évidement pour verrou (111),
- le couplage du cadre de porte (107) à l'aéronef (400), et
- le couplage de la porte de confidentialité (101) au premier montant (108) grâce à un ensemble de charnières (124) de manière que la porte de confidentialité (101), en position fermée (103), sépare la section cabine (300) en une section cabine intermédiaire (301) entre la porte de confidentialité (101) et la porte de poste de pilotage (104), et une section cabine principale (302) située sur l'arrière par rapport à la porte de confidentialité (101), ladite porte de confidentialité (101) pouvant pivoter grâce à l'ensemble de charnières (124) vers la section cabine intermédiaire (301) pour prendre une position ouverte (102), ladite porte de confidentialité (101) comprenant un verrou de décompression (112) agencé pour s'introduire dans l'évidement pour verrou (111) lorsque la porte de confidentialité (101) est en position fermée (103), et ledit verrou de décompression (112) étant conçu pour se dégager de l'évidement pour verrou (111) suite à une décompression de l'aéronef (400) détectée sur l'avant par rapport à la porte de confidentialité (101),
ledit cadre de porte (107) comprenant un connecteur (119) permettant de coupler le cadre de porte (107) à une structure adjacente (120) de l'aéronef (400), et le couplage du cadre de porte (107) à l'aéronef (400) comprenant le couplage du connecteur (119) à la structure adjacente (120) de façon que le cadre de porte (107) conserve au moins un degré de liberté de mouvement par rapport à la structure adjacente (120),
ladite porte de confidentialité (101) comprenant un verrou à ressort (130) disposé de manière à s'introduire dans une fente (131) prévue dans le premier montant (108) du cadre de porte (107) lorsque la porte de confidentialité (101) est en position ouverte (102) et que le verrou à ressort (130) est dans une première position (135), ledit verrou à ressort (130) étant couplé à une manette (132) disposée sur un côté avant (133) par rapport à la porte de confidentialité (101), et ladite manette (132) pouvant être actionnée pour faire sortir le verrou à ressort (130) du premier montant (108) afin qu'il prenne une deuxième position (136) pour ainsi dégager le verrou à ressort (130) de la fente (131),
ladite porte de confidentialité (101) comprenant en outre un ressort de verrou à ressort (137) disposé pour solliciter le verrou à ressort (130) vers le premier montant (108), ledit premier montant (108) comprenant une gâche cylindrique (138), ladite gâche cylindrique (138) comprenant la fente (131).

9. Procédé selon la revendication 8, dans lequel le deuxième montant (109) comporte un obturateur (113) déplaçable entre une position ouverte (114) et une position fermée (115) conçue pour retenir le verrou de décompression (112) à l'intérieur de l'évidement pour verrou (111), le procédé comprenant en outre l'opération consistant à :
- étendre un câble de poste de pilotage (117) depuis l'obturateur (113) jusque dans la section poste de pilotage (200) de manière que le câble de poste de pilotage (117) puisse être actionné depuis la section poste de pilotage (200) pour faire passer l'obturateur (113) en position fermée (115) afin de retenir le verrou de décompression (112) dans l'évidement pour verrou (111) et pour verrouiller la porte de confidentialité (101) en position fermée (115), sécurisant la section cabine intermédiaire (301) vis-à-vis de la section cabine principale (302) située sur l'arrière par rapport à la porte de confidentialité (101).

10. Procédé selon la revendication 8, dans lequel le deuxième montant (109) comporte un obturateur (113) déplaçable entre une position ouverte (114) et une position fermée (115) conçue pour retenir le verrou de décompression (112) à l'intérieur de l'évidement pour verrou (111),
le procédé comprenant en outre : l'opération consistant à étendre un câble de poste de pilotage (117) depuis l'obturateur (113) jusque dans la section poste de pilotage (200) de manière que le câble de poste de pilotage (117) puisse être actionné depuis la section poste de pilotage (200) pour faire passer l'obturateur (113) en position ouverte (114) afin que l'obturateur (113) ne retienne pas le verrou de décompression (112) dans l'évidement pour verrou (111),
et comprenant de préférence en outre : l'opération consistant à étendre un câble de cabine principale (118) depuis l'obturateur (113) en passant par le deuxième montant (109) et jusque dans la section cabine principale (302) de manière que le câble de cabine principale (118) puisse être actionné depuis la section cabine principale (302) pour faire passer l'obturateur (113) de la position fermée (115) à la position ouverte (114) afin que l'obturateur (113) ne retienne pas le verrou de décompression (112) dans l'évidement pour verrou (111), pour permettre à la porte de confidentialité (101) d'être ouverte depuis la section cabine principale (302).

11. Procédé selon la revendication 10, dans lequel le connecteur (119) comprend un goujon (121) placé à une extrémité supérieure du premier montant (108) et la structure adjacente (120) comprend une ferrure de plafond (123), ledit couplage du connecteur (119) à la structure adjacente (120) comprenant un couplage du goujon (121) à la ferrure de plafond (123) de manière que le cadre de porte (107) conserve au moins deux degrés de liberté de mouvement par rapport à la ferrure de plafond (123).

12. Procédé selon l'une quelconque des revendications 8 à 11, comprenant en outre les opérations consistant à : une fois la porte de confidentialité (101) couplée au premier montant (108) grâce à l'ensemble de charnières (124), faire pivoter la porte de confidentialité (101) en position ouverte (102) ; et introduire le verrou à ressort (130) dans la fente (131).

13. Procédé selon l'une quelconque des revendications 8 à 12, pour établir une porte de confidentialité (101) par rapport à une porte de poste de pilotage (104) d'un aéronef (400), au moyen d'un ensemble formant porte de confidentialité (150) selon l'une quelconque des revendications précédentes 1 à 4 ou d'un système formant porte de confidentialité (100) selon l'une quelconque des revendications précédentes 5 à 7.
